# EUROPÄISCHE PATENTSCHRIFT

(11) **EP 2 189 940 B1**
(45) Veröffentlichungstag und Bekanntmachung des Hinweises auf die Patenterteilung: **07.09.2011**
(21) Anmeldenummer: 09160153.4
(22) Anmeldetag: 13.05.2009
(51) Int. Cl.: G06T 7/00, G06T 7/20

(54) **Bestimmung von Indikator-Körperelementen und Pre-Indikator-Trajektorien**
Calculation of indicator body elements and pre-indicator trajectories
Détermination d'éléments de corps d'indicateur et de trajectoires de pré-indicateurs

(30) Priorität: 05.02.2009 US 150148 P; 19.11.2008 EP 08169422
(43) Veröffentlichungstag der Anmeldung: 26.05.2010
(73) Patentinhaber: BrainLAB AG, 85622 Feldkirchen (DE)
(72) Erfinder: Berlinger, Kajetan, 80798 München (DE)
(74) Vertreter: Schwabe - Sandmair - Marx

(56) Entgegenhaltungen:
- TONG LIN ET AL: "Tumor Targeting for Lung Cancer Radiotherapy Using Machine Learning Techniques" MACHINE LEARNING AND APPLICATIONS, 2008. ICMLA '08. SEVENTH INTERNATIONAL CONFERENCE ON, IEEE, PISCATAWAY, NJ, USA, 11. Dezember 2008 (2008-12-11), Seiten 533-538, XP031379459 ISBN: 978-0-7695-3495-4
- BERLINGER, KAJETAN: "Fiducial-Less Compensation of Breathing Motion in Extracranial Radiosurgery" DISSERTATION TECHNISCHE UNIVERSITÄT MÜNCHEN, FAKULTÄT FÜR INFORMATIK 2006, XP002566066 München Gefunden im Internet: URL:http://deposit.d-nb.de/cgi-bin/dokserv ?idn=985158697&dok_var=d1&dok_ext=pdf&file name=985158697.pdf> [gefunden am 2010-01-29]
- SCHWEIKARD A ET AL: "Fiducial-less respiration tracking in radiosurgery" LECTURE NOTES IN COMPUTER SCIENCE, SPRINGER VERLAG, DE, Bd. 3217, 1. Januar 2004 (2004-01-01), Seiten 992-999, XP009086135 ISSN: 0302-9743

## Beschreibung

Die vorliegende Erfindung betrifft die Bestimmung von Indikator-Körperelementen und von Pre-Indikator-Trajektorien, die insbesondere bei der Bestrahlung von Körperelementen genutzt werden können, die in Analysebildern nicht oder nur schwer erkennbar sind.

Es wird auf die prioritätsbegründende Anmeldung EP 08 169 422.6 und die entsprechende US-Anmeldung US-61/150,148 hingewiesen.

Vorteilhaft ermöglichen die Gegenstände der Erfindung die Lage eines Teilbereichs oder Teilvolumens eines anatomischen Körpers zu bestimmen, wobei der Teilbereich oder das Teilvolumen ein zu bestrahlendes vital-bewegtes Körperelement darstellt. Vorteilhaft ermöglicht die Bestimmung der Lage des Teilbereichs oder des Teilvolumens die Berücksichtigung einer durch die Vitalbewegung verursachten Lageänderung der vital-bewegten Körperelemente durch Steuerung eines Behandlungsstrahls.

Die unabhängigen Ansprüche beschreiben die Gegenstände der Erfindung. Die abhängigen Ansprüche sind auf vorteilhafte Ausführungsformen gerichtet.

Vorteilhaft ermöglichen die Gegenstände der Erfindung die Bestimmung eines Indikator-Körperelements und/oder einer Pre-Indikator-Trajektorie.

Das Körperelement ist insbesondere ein anatomisches Körperelement, d.h. ein Teil eines anatomischen Körpers. Vorteilhaft findet die Erfindung insbesondere dann Anwendung, wenn ein Körperelement zu bestrahlen ist. Beispielsweise handelt es sich bei dem zu bestrahlenden Körperelement um ein pathogenes Gewebe, wie z.B. um einen Tumor. Im Folgenden werden deshalb Begriffe, die mit dem zu bestrahlenden Körperelement im Zusammenhang stehen rein beispielhaft mit dem Begriff "Target" gekennzeichnet.

Während des Bestrahlungsvorganges ändert sich die Lage eines vital-bewegten Körperelements. Allgemein umfasst der Begriff "Lage" hierin eine zweidimensionale Bedeutung und bezieht sich auf die Lage in einem zweidimensionalen Bild, das durch Analysedaten beschrieben wird, und umfasst auch eine dreidimensionale Bedeutung und bezieht sich auf die Lage im dreidimensionalen Raum, wie sie beispielsweise mittels eines Bezugssystems beschreibbar ist. Die Indikator-Körperelemente und/oder Pre-Indikator-Trajektorien werden genutzt, um die Lageänderung zu berücksichtigen, die insbesondere durch die Vitalbewegung der vital-bewegten Körperelemente verursacht wird. Insbesondere kann die Steuerung eines Behandlungsstrahls zum Behandeln eines zu bestrahlenden Körperelements (z.B. Tumors) auf den bestimmten Indikator-Körperelementen und/oder Pre-Indikator-Trajektorien basieren.

Der Begriff "vital-bewegt" bedeutet, dass die Körperelemente aufgrund von Vitalfunktionen des Körpers, wie beispielsweise Atmung und/oder Herzschlag bewegt werden. Diese Funktionen des Körpers sind lebenserhaltend. Die dadurch erzeugten Bewegungen von Teilen des Körpers, wie beispielsweise Rippen oder Weichteile können bei der Bestrahlung von Körperelementen, wie beispielsweise eines Tumors, stören. Eine bewusste Unterdrückung der Atmung, die einen großen Anteil an der Vital-Bewegung hat, ist nur für eine begrenzte Zeit möglich. Es wäre also wünschenswert, Informationen zur Verfügung zu haben, die auf die Vital-Bewegung des Tumors schließen lassen, um so einen Behandlungsstrahl nachzuführen, so dass dieser den Tumor während des gesamten Bestrahlungsvorganges, der insbesondere länger als ein Atemzyklus dauert, trifft.

Bei den Indikator-Körperelementen handelt es sich um Körperelemente, die insbesondere durch diejenigen Vitalfunktionen des Körpers zur Bewegung veranlasst werden, die auch das Target (Tumor) zur Bewegung veranlassen. Man geht also davon aus, dass die Indikator-Körperelemente eine Bewegung durchlaufen, die ähnlich zu der Bewegung ist, die das zu bestrahlende Körperelement (Target) durchläuft. Insbesondere wird angenommen, dass zwischen den beiden Bewegungen eine Korrelation besteht.

Erfindungsgemäß werden Pre-Analysedaten genutzt, um insbesondere vor dem eigentlichen Bestrahlungsvorgang zumindest ein Indikator-Körperelement und/oder zumindest eine Pre-Indikator-Trajektorie zu bestimmen. Ist ein Indikator-Körperelement und/oder eine Pre-Indikator-Trajektorie bestimmt, so kann dann hierauf basierend während des eigentlichen Bestrahlungsvorganges der Behandlungsstrahl gesteuert werden, insbesondere kann gesteuert werden, welches Teilvolumen des Körpers der Behandlungsstrahl durchstrahlen soll. Hierbei handelt es sich vorzugsweise um jenes Teilvolumen, in dem sich das zu bestrahlende vital-bewegte Körperelement (wahrscheinlich) befindet. Die Bestimmung der Lage des zu bestrahlenden Teilvolumens wird vorzugsweise mittels eines Datenverarbeitungsverfahrens durchgeführt. Dieses Datenverarbeitungsverfahren nutzt vorzugsweise während der Bestrahlung gewonnene Informationen über die Lage des Indikator-Körperelements und/oder Informationen über den Verlaufs der Pre-Indikator-Trajektorien während der Bestrahlung sowie vorab bestimmte Informationen über die Korrelation zwischen der Lage des Indikator-Körperelements und des zu bestrahlenden Körperelements und/oder Informationen über die Korrelation einer während der Bestrahlung festgestellten Pre-Indikator-Trajektorie und der Trajektorie des zu bestrahlenden vital-bewegten Körperelements. Anders ausgedrückt werden vor der Bestrahlung vorhandene Informationen, die auf sogenannten Pre-Analysedaten beruhen, genutzt um während der Bestrahlung gewonnene Informationen, die Hinweise auf die Lage des zu bestrahlenden Körperelements geben, auszuwerten. Auf diese Art und Weise kann eine hohe Genauigkeit bei der Steuerung des Behandlungsstrahles erzielt werden und somit insbesondere sowohl die Strahlenbelastung für den Patienten verringert werden als auch die Effizienz der Strahlenbehandlung erhöht werden.

Bei dem oben erwähnten Pre-Analysedaten handelt es sich hierbei insbesondere um Daten, die mittels medizinischer Analyseverfahren insbesondere vor der Behandlung gewonnen wurden. Bei diesen medizinischen Analyseverfahren handelt es sich z.B. um Röntgendiagnostik, Kernspinanalyse, Ultraschallanalyse usw. Diese Pre-Analysedaten sind vorzugsweise Daten, die zeitlich aufgelöst die Lage des zu bestrahlenden vital-bewegten Körperelements und mindestens eines nicht zu bestrahlenden vital-bewegten Körperelements insbesondere im dreidimensionalen Raum beschreibt. Insbesondere ist die zeitliche Auflösung so, dass die durch die Vitalbewegungen verursachten Lageänderungen aus den Pre-Analysedaten ableitbar sind. Die zeitlichen Abstände zwischen den einzelnen Beschreibungen der Lagen der Körperelemente sind insbesondere kleiner als eine Minute oder kleiner als 5s. Die Pre-Analysedaten beschreiben insbesondere einen Bereich des Körpers räumlich aufgelöst, z.B. den Brustkorb eines Patienten, in dem sich das zu bestrahlende, vital-bewegte Körperelement sowie die nicht zu bestrahlenden, vital-bewegten Körperelemente befinden. Ein konkretes Beispiel für Pre-Analysedaten sind die Daten, die durch eine sogenannte vierdimensionale Computertomographie gewonnen werden, wobei sich die vier Dimensionen aus drei Raumdimensionen und der Zeit ergeben. Die räumliche Auflösung der Pre-Analysedaten ist vorzugsweise feiner als ein Zentimeter, insbesondere feiner als ein Millimeter. Die Pre-Analysedaten haben gegenüber den kurz vor der Bestrahlung oder während der Bestrahlung gewinnbaren sogenannten Inter-Analysedaten den Vorteil, dass sie einen höheren Informationsgehalt (insbesondere aufgrund der höheren räumlichen und/oder zeitlichen Auflösung) haben. Dieser ist insbesondere durch eine längere Messzeit und aufgrund fehlender räumlicher Beschränkungen aufgrund des Bestrahlungsapparats zu erzielen. Dieser höhere Informationsgehalt wird vorteilhaft durch die vorliegende Erfindung für die Steuerung des Bestrahlungsvorganges genutzt.

Basierend auf den Pre-Analysedaten wird vorzugsweise eine sogenannte Pre-Target-Trajektorie bestimmt. Diese Pre-Target-Trajektorie beschreibt die Trajektorie (also insbesondere die durchlaufene Ortsraumkurve) des zu bestrahlenden, vital-bewegten Körperelements, wobei diese Pre-Target-Trajektorie sich aus den Pre-Analysedaten ergibt. Wie bereits oben erwähnt, haben die Inter-Analysedaten aufgrund der gegebenen zeitlichen und räumlichen Beschränkungen einen geringeren Informationsgehalt und sind insbesondere nur räumlich zweidimensional. Dadurch ist während der Bestrahlung die Lage des zu bestrahlenden, vital-bewegten Körperelements nicht oder nur eingeschränkt, insbesondere unzuverlässig zu bestimmen. Wünschenswert wäre es deshalb, ein anderes hierin als Indikator-Körperelement bezeichnetes Körperelement vorab identifiziert zu haben, dessen relative Lage zu dem zu bestrahlenden, vital-bewegten Körperelements bestimmt wurde, dessen Lage sich auch während der Bestrahlung (zuverlässig) aus den Inter-Analysedaten bestimmen lässt, und dessen Lage während eines gesamten Vitalbewegungszyklus in bekannter Weise mit der Lage des zu bestrahlenden, vital-bewegten Körperelements korreliert.

Ob sich ein nicht zu bestrahlendes, vital-bewegtes Körperelement als Indikator-Körperelement eignet, hängt aber insbesondere davon ab, ob es eine mit dem zu bestrahlenden, vital-bewegten Körperelement in Zusammenhang stehende Bewegung durchläuft. Vorteilhaft wird deshalb erfindungsgemäß zumindest eine Kandidaten-Trajektorie bestimmt. Vorteilhaft wird überprüft, ob sich diese (zumindest eine) Kandidaten-Trajektorie als Indikator-Trajektorie eignet.

Hat man nun mindestens eine Kandidaten-Trajektorie, so wird vorteilhaft basierend auf der mindestens einen Kandidaten-Trajektorie und der Pre-Target-Trajektorie das zumindestens eine Kandidaten-Körperelement-, das der zumindestens einen Kandidaten-Trajektorie zugeordnet ist, als Indikator-Körperelement bestimmt. Die "Zuordnung" eines Kandidaten-Körperelements zu einer Kandidaten-Trajektorie bedeutet, dass das Kandidaten-Körperelement durch seine Lageänderung die Kandidaten-Trajektorie erzeugt. Vorzugsweise wird alternativ oder zusätzlich zu der vorgenannten Bestimmung zumindest eines der Kandidaten-Körperelemente als Indikator-Körperelement und/oder eine der zumindest einen Kandidaten-Trajektorien als Pre-Indikator-Trajektorie bestimmt. Es kann der Fall gegeben sein, dass weder eine Kandidaten-Trajektorie als Pre-Indikator-Trajektorie noch ein Kandidaten-Körperelement als Indikator-Körperelement bestimmbar ist. Insbesondere in diesem Fall wird basierend auf der zumindest einen Kandidaten-Trajektorie und der Pre-Target-Trajektorie bestimmt, dass keines der Kandidaten-Körperelemente als Indikator-Körperelement bestimmbar ist und/oder keine der Kandidaten-Trajektorien als Pre-Indikator-Trajektorie bestimmbar ist. Letzteres kann beispielsweise dann gegeben sein, falls die bestimmten Kandidaten-Körperelemente ihre Lage mit der Zeit nicht ändern und somit insbesondere nicht mit der Lageänderung des zu bestrahlenden vital-bewegten Körperelements korrelieren.

Die oben genannte Bestimmung des Indikator-Körperelements und/oder der Pre-Indikator-Trajektorie basiert vorzugsweise auf einem Vergleich, der zumindest einen Kandidaten-Trajektorie mit der Pre-Target-Trajektorie. Insbesondere wird basierend auf dem Vergleich bestimmt, ob ein Zusammenhang zwischen der zumindest einen Kandidaten-Trajektorie und Pre-Target-Trajektorie besteht. Insbesondere wird bestimmt, ob eine Korrelation zwischen der Kandidaten-Trajektorie und der Pre-Target-Trajektorie besteht. Falls dieser Zusammenhang, insbesondere die Korrelation besteht, kann eine Bestimmung des Kandidaten-Körperelements als Indikator-Körperelement und/oder eine Bestimmung der Kandidaten-Trajektorie als Pre-Indikator-Trajektorie erfolgen. An diese Bestimmung können jedoch andere oder zusätzliche Voraussetzungen geknüpft werden, wie dies auch im Folgenden noch dargestellt wird. Insbesondere sind derartige Voraussetzungen die Stärke der Korrelation zwischen der zumindest einen Kandidaten-Trajektorie und der Pre-Target-Trajektorie und/oder die Trackbarkeit des zumindest einen Kandidaten-Körperelements während der Vitalbewegung. Der Begriff "Trackbarkeit" wird weiter unten erläutert.

Um eine Bestimmung basierend auf einer "Trackbarkeit" zu ermöglichen, werden Inter-Analysedaten basierend auf den Pre-Analysedaten simuliert. Hierzu werden insbesondere Annahmen über die Bedingungen getroffen, die während einer Erstellung der Inter-Analysedaten (insbesondere während des Bestrahlungsvorganges) gegeben sind. Wie oben ausgeführt, beschreiben die Inter-Analysedaten insbesondere sich ändernde Lagen der nicht zu bestrahlenden Körperelemente. Wie oben ausgeführt, ist der Informationsgehalt der Inter-Analysedaten typischerweise geringer. Dies kann dazu führen, dass die (sich ändernden) Lagen nur eines Teils der nicht zu bestrahlenden Körperelemente basierend auf den Inter-Analysedaten bestimmbar sind. Insbesondere kann dies auch dazu führen, dass die Lagen der nicht zu bestrahlenden Körperelemente nur zu bestimmten Zeiten oder Zeiträumen innerhalb des Zeitraums, der von einer Vitalbewegung beansprucht wird, bestimmbar sind.

Hat man die Inter-Analysedaten simuliert, die insbesondere zweidimensionale Inter-Analysebilder darstellen, so kann man insbesondere die zumindest eine Kandidaten-Trajektorie basierend auf den simulierten Inter-Analysedaten bestimmen. Die Bestimmung der zumindest einen Kandidaten-Trajektorie bedeutet hier also insbesondere eine Bestimmung einer Kandidaten-Trajektorie, die sich aus den simulierten Inter-Analysedaten ergibt. Wie später dargelegt wird, kann es sich hierbei um eine zweidimensionale Trajektorie eines Kandidaten-Körperelements z.B. in einem zweidimensionalen Bild (z.B. Röntgenbild) handeln, das durch die Inter-Analysedaten, genauer durch die simulierten Inter-Analysedaten beschrieben wird. Es kann aber auch eine dreidimensionale Kandidaten-Trajektorie bestimmt werden, die sich aus den simulierten Inter-Analysedaten bestimmen lässt. Insbesondere lassen sich dreidimensionale Kandidaten-Trajektorien aus den simulierten Inter-Analysedaten bestimmen, wenn die Inter-Analysebedingungen die Aufnahme zweidimensionaler Bilder aus unterschiedlichen Richtungen beschreiben, wie weiter unten näher ausgeführt wird. Natürlich lassen sich dreidimensionale Kandidaten-Trajektorien gemäß einer Ausführungsform auch direkt aus den Pre-Analysedaten bestimmen, ohne den Weg über die simulierten Analysedaten zu gehen. Das heißt, die dreidimensionalen Kandidaten-Trajektorien basieren nicht auf den simulierten Inter-Analysedaten. Sie werden z.B. durch Herausgreifen eines Teilvolumens (VOI) aus dem Analysevolumen zu einem bestimmten Zeitpunkt erzeugt. Das herausgegriffene Teilvolumen wird dann in der Sequenz des dreidimensionalen Analysevolumens, die durch die Pre-Analysedaten beschrieben wird, durch ein Trackingverfahren "getrackt". Das Herausgreifen des Teilvolumens kann z.B. durch einen Such- oder Abtastalgorithmus erfolgen, wie dies weiter unten (im Zusammenhang mit einer Sequenz zweidimensionaler Bilder) beschrieben wird, so dass insbesondere das gesamte Analysevolumen (insbesondere zu einem bestimmten Zeitpunkt) durch Teilvolumina abgetastet wird. Hat man so dreidimensionale Kandidaten-Trajektorien bestimmt, so wird mindestens eine davon als Indikator-Trajektorie ausgewählt. Die Auswahl basierend insbesondere auf den hierin beschriebenen Kriterien, also beispielsweise wird diejenige Kandidaten-Trajektorie ausgewählt, die die stärkste Korrelation zu der Pre-Target-Trajektorie aufweist. Das der mindestens einen Indikator-Trajektorie zugeordnete Indikator-Körperelement kann dann einer weiteren Auswahl unterzogen werden, also insbesondere als Kandidaten-Körperelement für weitere Auswahlverfahren dienen, wie sie hierin beschrieben werden. Insbesondere kann diese Auswahl auf den simulierten Inter-Analysedaten basieren, wie auch im Folgenden beschrieben wird.

Vorzugsweise wird bei der Bestimmung der Pre-Indikator-Trajektorie und/oder des Indikator-Körperelements eine dreidimensionale Kandidaten-Trajektorie, die z.B. auf eine der oben beschriebenen Weisen bestimmt wurde, herangezogen. Zu der Bestimmung der Pre-Indikator-Trajektorie und/oder des Indikator-Körperelements wird vorzugsweise weiter die dreidimensionale Pre-Target-Trajektorie herangezogen, die insbesondere direkt aus den Pre-Analysedaten gewonnen wird und nicht aus simulierten Inter-Analysedaten. Gemäß einer Ausführungsform ist es jedoch möglich, auch die Pre-Target-Trajektorie, die zur Bestimmung der Pre-Indikator-Trajektorie und des Indikator-Körperelements herangezogen wird, basierend auf den simulierten Inter-Analysedaten zu bestimmen. Gemäß einer weiteren Ausführungsform ist es möglich, die Pre-Indikator-Trajektorie und das Indikator-Körperelement basierend auf zweidimensionalen Kandidaten-Trajektorien, die basierend auf den simulierten Inter-Analysedaten bestimmt wurden, und insbesondere auch basierend auf einer zweidimensionalen Pre-Target-Trajektorie, die basierend auf den simulierten Inter-Analysedaten bestimmt wurde, zu bestimmen. Die vorgenannten Bestimmungen erfolgen vorzugsweise wiederum durch Vergleich der Kandidaten-Trajektorien mit der Pre-Target-Trajektorie, insbesondere durch Feststellung eines Zusammenhangs zwischen diesen Trajektorien, insbesondere der Bestimmung einer Korrelation. Insbesondere ist es möglich, aus den Pre-Analysedaten und den Analysebedingungen zu berechnen, wie eine zweidimensionale Pre-Target-Trajektorie in einem oder mehreren Bildern (insbesondere aus bestimmten Aufnahmerichtungen gewonnenen Bildern) verlaufen würden. Diese zweidimensionalen Pre-Target-Trajektorien können dann mit den simulierten zweidimensionalen Kandidaten-Trajektorien verglichen werden, um insbesondere die Korrelation zu bestimmen. Insbesondere kann dieser Vergleich separat für die verschiedenen Aufnahmerichtungen entsprechenden, zweidimensionalen, simulierten Inter-Analysebilder vorgenommen werden. Insbesondere können die Kandidaten-Körperelemente oder Kandidaten-Trajektorien nur dann als Indikator-Körperelement und/oder Pre-Indikator-Trajektorie in Betracht gezogen werden, wenn sich für die zweidimensionalen Kandidaten-Trajektorien, die unterschiedlichen Aufnahmerichtungen - aber demselben Kandidaten-Körperelement zugeordnet sind, ähnliche Korrelationen zeigen.

In der oben erwähnten, prioritätsbegründenden Anmeldung EP 08 169 422.6 (oder US-61/150,148) ist ein Trackingverfahren, insbesondere ein Trackingalgorithmus zum Tracken von Körperelementen beschrieben. Mit dem dort beschriebenen Trackingverfahren ist die Lage vital-bewegter Körperelemente bestimmbar. Bei dem dort beschriebenen Verfahren werden ein Teil eines Bildes, der als Prozess-Region beschrieben ist, in einem Bild zu einem späteren Zeitpunkt insbesondere unter Verwendung von Ähnlichkeitskriterien gesucht. Ist eine ähnliche Prozess-Region gefunden, so ist das Tracking erfolgreich. Das dort beschriebene Trackingverfahren stellt nur ein Beispiel für ein Trackingverfahren dar. Es können beliebige Trackingverfahren, insbesondere Trackingalgorithmen genutzt werden, die insbesondere auf Ähnlichkeitskriterien basieren. Insbesondere können Suchalgorithmen angewendet werden, um ein Körperelement, das durch einen Bildausschnitt eines ersten Bildes zu einem ersten Zeitpunkt beschrieben wird, in einem zweiten Bild zu einem späteren zweiten Zeitpunkt zu finden und somit zu "tracken". Insbesondere soll hierin der Vorgang des Trackens simuliert werden. Es soll also insbesondere simuliert werden, dass die Körperelemente mittels des Trackingverfahren, insbesondere Trackingalgorithmus verfolgt werden, wenn dieser auf die Inter-Analysedaten angewendet wird, die sich aufgrund der Simulation mit der Zeit ändern. Das Tracking bezeichnet also die Verfolgung der Körperelemente anhand der simulierten Inter-Analysedaten. Obwohl die Inter-Analysedaten in der Vergangenheit erzeugt wurden, wird der Begriff des "Tracking" den Begriff des "Tracing" vorgezogen, da eine in der Gegenwart sich abspielende Generierung von Inter-Analysedaten und die Anwendung des Trackingalgorithmuses auf diese scheinbar in der Gegenwart generierten Inter-Analysedaten simuliert wird.

Vorzugsweise wird hierbei dasselbe Trackingverfahren, insbesondere derselbe Trackingalgorithmus angewendet, wie dasjenige bzw. derjenige, das bzw. der später bei dem Bestrahlungsvorgang, während dem reale Inter-Analysedaten erzeugt werden, angewendet werden soll. Auf diese Art und Weise kann insbesondere simuliert werden, ob ein Tracking während des Bestrahlungsvorganges basierend auf den realen Inter-Analysedaten erfolgreich ist. Wenn ein derartiges Tracking eines Körperelements erfolgreich ist, wird dieses Körperelement hierin als "trackbar" bezeichnet. Es ist also dann eine "Trackbarkeit" des Körperelements gegeben

Vorzugsweise werden nur diejenigen nicht zu bestrahlenden Körperelemente als Indikator-Körperelemente in Betracht gezogen, die durch den Trackingalgorithmus, der auf die simulierten Inter-Analysedaten angewendet wird, trackbar sind. Auf diese Art und Weise können insbesondere solche nicht zu bestrahlenden Körperelemente als Indikator-Körperelemente ausgeschlossen werden, die zwar in ihrer Bewegung eine Korrelation zu der Bewegung des zu bestrahlenden, vital-bewegten Körperelements zeigen, die aber mit einer hohen Wahrscheinlichkeit während des Bestrahlungsvorganges nicht oder nur unzureichend trackbar sind.

Vorzugsweise können erfindungsgemäß mehrere Indikator-Körperelemente und/oder mehrere Pre-Indikator-Trajektorien bestimmt werden. Dies hat den Vorteil, dass während des Bestrahlungsvorganges die Steuerung basierend auf den Indikator-Körperelementen und/oder der Pre-Indikator-Trajektorien stabiler und sicherer gestaltet werden kann. Insbesondere können dann während des tatsächlichen Bestrahlungsvorganges Indikator-Körperelemente nicht mehr zur Steuerung des Behandlungsstrahles herangezogen werden, die in ihrem Bewegungsverhalten von der Mehrzahl der Indikator-Körperelemente abweichen und/oder die nicht oder nicht ausreichend während des Bestrahlungsvorganges trackbar sind.

Die simulierten Inter-Analysedaten können räumlich dreidimensional und zeitlich aufgelöst sein. Insbesondere kann die räumliche Auflösung und/oder die zeitliche Auflösung gröber als bei den Pre-Analysedaten sein. Gemäß einer bevorzugten Ausführungsform sind die simulierten Inter-Analysedaten räumlich zweidimensional und beschreiben zeitlich aufgelöst die Lagen der zu bestrahlenden und nicht zu bestrahlenden Körperelemente in einer Fläche, z.B. mittels eines zweidimensionalen Bildes (z.B. Röntgenbild). Es ist möglich, dass die Körperelemente nicht zu jedem Zeitpunkt sichtbar sind. Die Lagen derartiger Körperelemente werden somit nur zeitweise durch die Inter-Analysedaten beschrieben. Auch ist möglich, dass die Inter-Analysedaten nur einen Teil der Lagen der Körperelemente beschreiben, wie sie durch die Pre-Analysedaten beschrieben werden. Insbesondere bei zweidimensionalen Aufnahmen ist es möglich, dass Körperelemente durch andere Körperelemente zumindest zeitweise verdeckt sind.

Vorzugsweise werden aus den simulierten zweidimensionalen Inter-Analysedaten zweidimensionale Kandidaten-Trajektorien bestimmt. Die oben zur Bestimmung der Pre-Indikator-Trajektorien und/oder des Indikator Körperelements herangezogenen Kandidaten-Trajektorien können also dreidimensionale und/oder zweidimensionale Kandidaten-Trajektorien sein. Die zweidimensionale Kandidaten-Trajektorie beschreibt die Vitalbewegung des zumindestens einen Kandidaten-Körperelements in der Fläche. Da die Vitalbewegungen insbesondere zyklische Bewegungen sind, sind die Trajektorien (zweidimensionale und/oder dreidimensionale Trajektorien) insbesondere in sich geschlossen. Vorzugsweise werden nur diejenigen zwei- oder dreidimensionalen Kandidaten-Trajektorien (und/oder die zugeordneten Kandidaten-Körperelemente) für die Bestimmung als Pre-Indikator-Trajektorie (und/oder Indikator-Körperelement) herangezogen, die eine geschlossene Trajektorie aufweisen.

Vorzugsweise wird zumindest eine Kandidaten-Trajektorie bestimmt. Diese Bestimmung erfolgt vorzugsweise durch Anwendung des Trackingalgorithmus auf die simulierten Inter-Analysedaten. Insbesondere erfolgt die Bestimmung so, dass ein Kandidaten-Körperelement in den simulierten Inter-Analysedaten bestimmt wird. Die Inter-Analysedaten weisen insbesondere eine Sequenz von Einzelbildern auf (insbesondere zweidimensionalen Einzelbildern). Aus dieser Sequenz wird ein Einzelbild herausgegriffen. In diesem Einzelbild wird z.B. basierend auf bestimmten Kriterien oder einem bestimmen Suchalgorithmus folgend oder einer strikten Suchreihenfolge folgend, die ein schrittweises Abtasten des gesamten Bildes beschreibt, ein Teilbereich herausgegriffen. Dieser Teilbereich ist dann das Kandidaten-Körperelement. Dieses Kandidaten-Körperelement wird dann mittels des Trackingalgorithmus in den anderen Einzelbildern der Sequenz getrackt. Auf diese Art und Weise erhält man dann die Kandidaten-Trajektorie (, falls das Kandidaten-Körperelement trackbar ist).

Insbesondere können die Kandidaten-Körperelemente wie folgt bestimmt werden. Die Pre-Analysedaten sind räumlich dreidimensional und beschreiben verschiedene Zeitpunkte, insbesondere eines oder mehreren Zyklen einer oder mehrerer Vitalbewegungen (z.B. durch Atmung oder Herzschlag verursacht). In diesem dreidimensionalen Raum wird ein Volumen insbesondere nach bestimmten Regeln herausgegriffen. Diese Regeln können einem Suchalgorithmus folgen, der beispielsweise besonders kontrastreiche Teilbereiche herausgreift. Es kann auch so vorgegangen werden, dass schrittweise das gesamte Volumen insbesondere zu einem bestimmten Zeitpunkt durch Teilvolumen (hierin auch VOI genannt) entsprechend einer Suchreihenfolge abgetastet wird. Durch Simulation der Inter-Analysedaten kann dann bestimmt werden welcher zweidimensionale Teilbereich (hierin auch ROI genannt) in dem simulierten zweidimensionalen Bild, das durch die simulierten Inter-Analysedaten beschrieben wird, dem Teilvolumen (VOI) entspricht. Dieser zweidimensionale Teilbereich ist dann das Kandidaten-Körperelement. Dieses Kandidaten-Körperelement dient dann als Ausgangspunkt für den Trackingalgorithmus, der versucht das Kandidaten-Körperelement in der Sequenz von zweidimensionalen Analysebildern, die durch die simulierten Inter-Analysedaten beschrieben werden, zu tracken. D.h. der Trackingalgorithmus versucht das Kandidaten-Körperelement zu den verschiedenen Zeitpunkten, die durch die Sequenz beschrieben werden, in den jeweiligen einzelnen aufeinanderfolgenden zweidimensionalen Bildern zu finden. Die Sequenz von gefundenen Kandidaten-Körperelementen in der Sequenz von zweidimensionalen Bildern beschreibt dann die Kandidaten-Trajektorie. Wie oben beschrieben wurde, können derartige Teilvolumen (VOI) als Indikator-Körperelemente ausgeschlossen werden, deren entsprechenden zweidimensionalen Teilbereiche (zweidimensionale Kandidatenelemente) durch den Trackingalgorithmus nicht trackbar sind. Denn von diesen nicht trackbaren Kandidatenelementen kann man annehmen, dass sie auch während des realen Messvorgangs nicht trackbar sind.

Vorzugsweise werden die Inter-Analysedaten basierend auf den Inter-Analysebedingungen simuliert. Diese Inter-Analysebedingungen beschreiben die Bedingungen unter denen die Analyse erfolgen soll. Insbesondere beschreiben sie die Bedingungen unter denen ein dreidimensionaler Raum (Analysevolumen) mittels einer Analysevorrichtung so untersucht wird, dass diese Analysevorrichtung ein zweidimensionales Analyseergebnis dieses Raums (Analysevolumens) liefert. Der zweidimensionale Teilbereich (ROI), der dem dreidimensionalen Teilbereich (VOI) entspricht, ist das zweidimensionale Analyseergebnis des dreidimensionalen Teilbereichs (VOI). Insbesondere beschreiben die Inter-Analysebedingungen Aufnahmerichtungen relativ zu dem dreidimensionalen Analysevolumen, das durch die Pre-Analysedaten beschrieben wird. Insbesondere beschreiben die Inter-Analysebedingungen, wie ein zweidimensionales Röntgenbild sich aus den dreidimensionalen Pre-Analysedaten unter bestimmten Aufnahmerichtungen simulieren lässt. Die Inter-Analysebedingungen beschreiben also insbesondere die Abbildungsgeometrie (z.B. Aufnahmerichtungen), die bei der simulierten Erzeugung der simulierten Analysebilder, die durch die simulierten Inter-Analysedaten beschrieben werden, gegeben ist. Weiter können Analysebedingungsdaten, die die Analysebedingungen beschreiben, Informationen über die Lage einer Analysequelle (z.B. Röntgenquelle) und/oder die Lage eines Analysedetektors (Röntgenlichtdetektors) relativ zu einander und/oder zu dem zu analysierenden Volumen umfassen. Die Analysebedingungsdaten, die die Abbildungsbedingung beschreiben, umfassen also vorzugsweise Information, die die Berechnung einer Lage einer Quelle der Analysestrahlen und/oder Analysewellen (z.B. der Röntgenstrahlen) relativ zu einer Bildebene erlauben. Zu dem durch die Abbildungsgeometrie definierten Zusammenhang zwischen dreidimensionalen Analyseobjekten und zweidimensionalen Analysebildern wird insbesondere auf folgende Veröffentlichungen verwiesen:
1. "An Efficient and Accurate Camera Calibration Technique for 3D Machine Vision", Roger Y. Tsai, Proceedings of IEEE Conference on Computer Vision and Pattern Recognition, Miami Beach, FL, 1986, pages 364-374
2. "A versatile Camera Calibration Technique for High-Accuracy 3D Machine Vision Metrology Using Off-the-Shelf TV Cameras and Lenses", Roger Y. Tsai, IEEE Journal of Robotics and Automation, Vol. RA-3, No. 4, August 1987, pages 323-344. siehe auch unter http://www.cs.cmu.edu/∼rgw/TsaiDesc.html
3. Veröffentlichung von Ziv Yaniv, "Fluoroscopic X-ray Image Processing and Registration for Computer-Aided Orthopedic Surgery"
4. Tong Lin et al., "Tumor Targeting for Lung Cancer Radiotherapy Using Machine Learning Techniques", Seventh International Conference on Machine Learning and Applications, ICMLA 2008. IEEE, PISCATAWAY, NJ, USA, 11. Dezember 2008, Seiten 533 - 538, ISBN 978-0-7695-3495-4, offenbart die Verfolgung von Lungentumoren in bildgeführter Bestrahlungs-Therapie ohne implantierte Marker oder externen Marker-Ersatz. Stattdessen werden anatomische Landmarken für das indirekte Ableiten der Tumorposition verwendet.

Wie oben ausgeführt, werden vorzugsweise mindestens zwei zweidimensionale simulierte Inter-Analysedaten bestimmt, die mindestens zwei zweidimensionale Analysebilder beschreiben. Diese werden z.B. unter der Annahme von mindestens zwei unterschiedlichen Aufnahmerichtungen simuliert. Die angenommenen Aufnahmerichtungen (relativ zum Analysevolumen) entsprechen vorzugsweise den realen oder geplanten Aufnahmerichtungen, die während des Bestrahlungsvorganges gegeben sind oder gegeben sein sollen. Für jede Aufnahmerichtung, aus der die zweidimensionalen Analysebilder gewonnen werden sollen, wird vorzugsweise eine Sequenz von zweidimensionalen Analysebildern bestimmt. Ist ein Kandidaten-Körperelement für ein Einzelbild einer Sequenz bestimmt, wie dies z.B. oben beschrieben wurde, so kann ein Trackingalgorithmus auf diese Sequenz angewendet werden. Gemäß einer Ausführungsform wird jeweils ein Teilbereich (ROI) in einem Bild (z.B. dem ersten Bild) einer jeden Sequenz, die jeweils einer anderen Aufnahmerichtung entspricht, bestimmt. Dieser Teilbereich (ROI) entspricht einem Kandidaten-Körperelement. Beispielsweise sind die Bilder einer ersten Sequenz aus einer (simulierten) ersten Aufnahmerichtung mittels der Simulation gewonnen und der bestimmte Teilbereich (ROI) stellt ein Teilvolumen (VOI) betrachtet aus der (simulierten) ersten Aufnahmerichtung dar. Die Bilder einer zweiten Sequenz wurden mittels der Simulation aus einer (simulierten) zweiten Aufnahmerichtung gewonnen und ein im ersten Bild der zweiten Sequenz bestimmter Teilbereich (ROI) stellt dasselbe Teilvolumen (VOI) betrachtet aus der (simulierten) zweiten Aufnahmerichtung dar. Das heißt, das jeweils bestimmte Kandidaten-Körperelement wird vorzugsweise basierend nur auf einem einzigen Teilvolumen (VOI) des zu einem bestimmten, einzigen Zeitpunkt gegebenen Analysevolumens bestimmt. Die Teilbereiche (ROI) in den Analysebildern, die aus unterschiedlichen simulierten Aufnahmerichtungen gewonnen wurden, stellen somit unterschiedliche Ansichten desselben Teilvolumens (VOI) im Analysevolumen zu einem bestimmten einzigen Zeitpunkt dar, wobei die Ansichten aus verschiedenen Aufnahmerichtungen gewonnen wurden. Der Trackingalgorithmus wird nun vorzugsweise getrennt auf die jeweilige Sequenz von zweidimensionalen Analysebildern angewendet, wobei jedes Bild der Sequenz einem anderen Zeitpunkt entspricht. Auf diese Art und Weise erhält man für jede Aufnahmerichtung eine Kandidaten-Trajektorie, die der Sequenz von Kandidaten-Körperelementen in der Sequenz von zweidimensionalen simulierten Inter-Analysebildern, die einer Aufnahmerichtung entsprechen, entspricht. Basierend auf den Analysebedingungen kann nun überprüft werden, ob die Kandidaten-Trajektorien zu jedem einzelnen Zeitpunkt, also für jedes einzelne Bild der Sequenz aus demselben Teilvolumen des Analysevolumens stammen können. Diese Überprüfung kann insbesondere durch die Anwendung von Rückprojektion und/oder durch die Anwendungen der Prinzipien der Epipolargeometrie durchgeführt werden, insbesondere können die oben beschriebenen Information über die Abbildungsgeometrie und der beschriebene Zusammenhang zwischen dreidimensionalen Analyseobjekten und zweidimensionalen Analysebildern herangezogen werden. Für jeden Satz von Bildern, der mindestens zwei Analysebilder umfasst, kann also überprüft werden, ob die jeweiligen Kandidaten-Körperelemente (Teilbereiche des zweidimensionalen Analysebilds) aus einem einzigen Teilvolumen (VOI) des Analysevolumens durch Simulation einer Analyse unter den angenommenen Inter-Analysebedingungen mittels der Simulation erzeugt werden können. Der Satz von mindestens zwei Analysebildern beschreibt dasselbe Analysevolumen (VOI) zu einem bestimmten einzigen Zeitpunkt aus unterschiedlichen Aufnahmerichtungen. Jedes Analysebild des Satzes ist dabei einer anderen Sequenz von Analysebildern zugeordnet. Falls die Überprüfung zu einem negative Ergebnis fühlt, d.h. falls die Analysebilder nicht von einem einzigen Teilvolumen erzeugt werden konnten, wird von einem erhöhten Risiko ausgegangen, dass das Tracking während des realen Bestrahlungsvorganges fehlschlägt. Die Kandidaten-Körperelemente und/oder Kandidaten-Trajektorien, für die sich das negative Ergebnis ergab, werden deshalb vorzugsweise verworfen und nicht für die Bestimmung als Indikator-Körperelement und/oder Pre-Indikator-Trajektorie herangezogen.

Aus einer Vielzahl von Kandidaten-Körperelementen kann ein Indikator-Körperelement oder können mehrere Indikator-Körperelemente, wie im Folgenden beschrieben, ausgewählt werden. Entsprechend kann aus einer Vielzahl von Kandidaten-Trajektorien eine Pre-Indikator-Trajektorie oder können aus einer Vielzahl von Kandidaten-Trajektorien mehrere Pre-Indikator-Trajektorien wie folgt ausgewählt werden. Für die Auswahl werden die Kandidaten-Trajektorien vorzugsweise mit der Pre-Target-Trajektorie verglichen. Dieser Vergleich umfasst insbesondere die Bestimmung der Korrelation zwischen der Kandidaten-Trajektorie und der Pre-Target-Trajektorie. Vorzugsweise wird eine Kandidaten-Trajektorie umso eher als Pre-Indikator-Trajektorie ausgewählt, umso stärker diese Korrelation ist. Insbesondere kann eine Schwelle vorgegeben sein, unterhalb der eine Kandidaten-Trajektorie (und das ihr zugeordnete Kandidaten-Körperelement) als Pre-Indikator-Trajektorie (und als Indikator-Körperelement) abgelehnt wird. Diese Schwelle beschreibt die Stärke der Korrelation und wenn diese Schwelle überschritten wird, wird also vorzugsweise eine Kandidaten-Trajektorie als Pre-Indikator-Trajektorie ausgewählt. Entsprechend wird das der Kandidaten-Trajektorie entsprechende (zugeordnete) Kandidaten-Körperelement als Indikator-Körperelement ausgewählt.

Die Bestimmung der Korrelation kann z.B. im zweidimensionalen oder im dreidimensionalen Raum erfolgen. Erfolgt die Bestimmung der Korrelation im dreidimensionalen Raum so werden insbesondere die Kandidaten-Trajektorien im dreidimensionalen Analysevolumen bestimmt, das durch die Pre-Analysedaten beschrieben wird. Um die Vielzahl der Kandidaten-Trajektorien zu bestimmen kann auch hier z.B. wieder so vorgegangen werden, dass schrittweise Teilvolumina (VOIs) aus dem Analysevolumen, das zu einem einzigen Zeitpunkt gegeben ist, herausgegriffen werden, um so das Gesamtvolumen schrittweise abzutasten. Auch kann hier ein bereits oben erwähnter Suchalgorithmus genutzt werden, der beispielsweise besonders kontrastreiche Teilvolumina (VOIs) herausgreift. Hat man ein derartiges Teilvolumen (VOI), so wird die Trajektorie dieses Teilvolumens als dreidimensionale Kandidaten-Trajektorie bestimmt. Zur Bestimmung der Trajektorie wird das in einem Zeitpunkt gegebene Teilvolumen (VOI) in den in anderen Zeitpunkten gegebenen Teilvolumina gesucht, sodass sich eine Sequenz von Teilvolumina ergibt, die die Trajektorie bildet. Die bestimmte dreidimensionale Kandidaten-Trajektorie wird dann mit der Pre-Target-Trajektorie verglichen, um die Korrelation zu bestimmen. Entsprechend kann auch im zweidimensionalen Raum vorgegangen werden. Hierbei wird dann beispielsweise eine zweidimensionale Kandidaten-Trajektorie basierend auf den simulierten Inter-Analysedaten bestimmt. Diese zweidimensionale Kandidaten-Trajektorie kann dann mit der simulierten zweidimensionalen Pre-Target-Trajektorie, die basierend auf den simulierten Inter-Analysedaten bestimmt wurden, verglichen werden, um die Korrelation zu bestimmen. Zur Bestimmung der zweidimensionalen Kandidaten-Trajektorie kann der Trackingalgorithmus herangezogen werden. Die zweidimensionale Kandidaten-Trajektorie kann aber auch basierend auf den Analysebedingungen (Aufnahmerichtungen) aus der Sequenz der Teilvolumina (VOIs) bestimmt werden. Entsprechend kann bei der Bestimmung der zweidimensionalen Pre-Target-Trajektorie auf den Trackingalgorithmus zurückgegriffen werden. Dies kann jedoch fehlschlagen, da die zu bestrahlenden Körperelemente öfters schwer trackbar sind. Deshalb wird eine zweidimensionale Pre-Target-Trajektorie vorzugsweise basierend auf der Sequenz von Teilvolumina, die dem zu bestrahlenden vital-bewegten Körperelement entsprechen, unter Berücksichtigung der Analysebedingungen (Aufnahmerichtungen) bestimmt.

Ist die Korrelation in der oben genannten Weise bestimmt, so wird die bestimmte Korrelation vorzugsweise während des (realen) Bestrahlungsvorganges genutzt, um basierend auf dem Indikator-Körperelement und/oder der Pre-Indikator-Trajektorie die Lage des zu bestrahlenden Körperelements zu bestimmen. Hierbei wird davon ausgegangen, dass sich die Korrelation nicht geändert hat, wenn man die Situation zur Zeit der Aufnahme der Pre-Analysedaten mit der Situation während der Bestrahlung vergleicht. Es kann jedoch sein, dass sich die Korrelation geändert hat. Beispielsweise kann der Patient ein anderes Atemverhalten zeigen. Aus diesem Grund werden insbesondere kurz vor der Bestrahlung reale Inter-Analysedaten bereitgestellt. Hierbei kann es sich um dreidimensionale und vorzugsweise um zweidimensionale reale Inter-Analysedaten, die eine Sequenz zweidimensionaler realer Analysebilder beschreiben, handeln. Mindestens ein zuvor basierend auf den Pre-Analysedaten bestimmter Teilbereich (ROI), der einem Indikator-Körperelement entspricht, wird vorzugsweise in einem einzigen zweidimensionalen Analysebild der Sequenz insbesondere basierend auf Ähnlichkeitskriterien gesucht. Dann wird der Trackingalgorithmus angewendet, um die Sequenz von Teilbereichen (ROIs) in der Sequenz von zweidimensionalen Analysebildern zu bestimmen. Basierend auf den realen Inter-Analysedaten wird somit die Trajektorie des Indikator-Körperelements bestimmt. Da diese Trajektorie insbesondere kurz vor dem eigentlichen Bestrahlungsvorgang gewonnen wird, wird sie hierin auch als Inter- Indikator-Trajektorie bezeichnet. Diese wird mit der insbesondere basierend auf den simulierten Analysedaten bestimmten insbesondere zweidimensionalen Pre-Indikator-Trajektorie, verglichen. Basierend auf diesem Vergleich wird die bis jetzt beschriebene und bereits vorab bestimmte Korrelation, die hierin auch als Pre-Korrelation bezeichnet wird, korrigiert, um so eine aktualisierte Korrelation, die insbesondere kurz vor der Bestrahlung gegeben ist und als Inter-Korrelation bezeichnet wird, zu bestimmen. Die Pre-Korrelation ergibt sich aus einem Vergleich der Pre-Indikator-Trajektorie mit der Pre-Target-Trajektorie.

Gemäß einer anderen alternativen Vorgehensweise, bei der insbesondere mindestens zwei Aufnahmerichtungen gegeben sind, wird die dreidimensionale Inter- Indikator-Trajektorie mit der Pre-Target-Trajektorie verglichen, um die Inter-Korrelation zu bestimmen.

Ist die Inter-Korrelation bestimmt, so wird sie dann vorzugsweise zur Steuerung der Lage des Behandlungsstrahls genutzt, wobei die jeweils aktuell gegebene Lage des Indikator-Körperelements berücksichtigt wird. Weiter gibt es hierbei zwei Möglichkeiten, um die Inter-Korrelation zu bestimmen. Gemäß der einen Möglichkeit, die oben beschrieben wurde, geht man davon aus, dass sich die Pre-Target-Trajektorie des zu bestrahlenden Körperelements nicht geändert hat. Diese Annahme ist allerdings eher unwahrscheinlich, da, wenn die Änderung der Trajektorie z.B. durch eine andere Atmung des Patienten verursacht wurde, man davon ausgehen kann, dass sich die Pre-Target-Trajektorie (Tumor-Trajektorie) entsprechend geändert hat. Gemäß einer weiteren Ausführungsform vergleicht man die Pre-Indikator-Trajektorie mit der Inter-Indikator-Trajektorie und basierend auf diesem Vergleich, der insbesondere eine Bestimmung der Änderung der Trajektorie umfasst, wird die Pre-Target-Trajektorie (entsprechend) geändert. Diese geänderte Trajektorie wird hierin als Inter-Target-Trajektorie bezeichnet. Insbesondere kann die Änderung der Pre-Target-Trajektorie so erfolgen, dass sie eine ähnliche Deformation (insbesondere ähnliche Aufweitung oder Schrumpfung) und/oder eine ähnliche Verschiebung der Trajektorie umfassen. Beispielsweise kann hier ein elastisches Model der Trajektorie zugrunde gelegt werden und eine elastische Deformation der Trajektorie angenommen werden. Die Inter-Korrelation beschreibt dann vorzugsweise die Korrelation zwischen der Inter-Target-Trajektorie und der Inter-Indikator-Trajektorie.

Gemäß einer weiteren Ausführungsform kann zusätzlich oder alternativ zu der oben genannten Vorgehensweise aus mehreren bestimmten Inter-Indikator-Trajektorien diejenige als Inter-Indikator-Trajektorie ausgewählt werden, die zur späteren Steuerung des Behandlungsstrahls genutzt werden soll, die sich am wenigsten geändert hat, bei der also der geringste Unterschied zwischen der Pre-Indikator-Trajektorie und Inter-Indikator-Trajektorie gegeben ist.

Gemäß einer weiteren Ausführungsform der Erfindung, die mit den vorhergehenden Ausführungsformen kombiniert werden kann, werden Vitalfunktionsdaten bereitgestellt und für das erfindungsgemäße Verfahren genutzt. Die Vitalfunktionsdaten beschreiben Vital-Parameter, wie z.B. den Puls und/oder die Atmung, insbesondere die Amplitude und/oder die Frequenz des Pulses und/oder der Atmung. Insbesondere umfassen die Vitalfunktionsdaten die Amplitude des Vitalparameters in Abhängigkeiten von der Zeit. Vorzugsweise umfassen die Vitalfunktionsdaten eine Zuordnung zu den Analysedaten. Somit sind insbesondere Vitalfunktionsdaten zu den jeweiligen (zweidimensionalen oder dreidimensionalen) Analysebildern zugeordnet. Diejenigen Vitalfunktionsdaten, die den Pre-Analysedaten zugeordnet sind, werden als Pre-Vitalfunktionsdaten bezeichnet. Diejenigen Vitalfunktionsdaten, die den realen Inter-Analysedaten zugeordnet sind, werden Inter-Vitalfunktionsdaten genannt. Die Inter-Vitalfunktionsdaten beschreiben also die Vitalparameter vor oder während der Bestrahlung, insbesondere kurz vor der Bestrahlung.

Vorzugsweise wird die Pre-Indikator-Trajektorie als Funktion der Vitalparameter bestimmt, wobei die Bestimmung basierend auf den Pre-Vitalfunktionsdaten und insbesondere basierend auf der Zuordnung der Pre-Vitalfunktionsdaten jeweils zu den mit den Pre-Analysedaten beschriebenen dreidimensionalen einzelnen Analysebildern erfolgt. Insbesondere wird die Lage des Indikator-Körperelements als Funktion der Amplitude und/oder Frequenz des durch die Vitalfunktionsdaten beschriebenen Vitalparameters bestimmt. Ist somit insbesondere die Indikator-Trajektorie, insbesondere die Form der Indikator-Trajektorie als Funktion der Vitalparameter, insbesondere als Funktion der Amplitude und/oder Frequenz der Vitalparameter beschrieben, so wird basierend auf den Inter-Vitalfunktionsdaten die Pre-Indikator-Trajektorie vorzugsweise korrigiert, wobei die korrigierte Pre-Indikator-Trajektorie als Vital-Indikator-Trajektorie bezeichnet wird. Ist beispielsweise die Amplitude der Atmung vor der Bestrahlung geringer als während der Erzeugung der Pre-Analysedaten, so wird die Vital-Indikator-Trajektorie so bestimmt, dass sie einen kleineren Bewegungsbereich durchläuft. Basierend auf der Vital-Indikator-Trajektorie wird dann auch die Korrelation zwischen der Vital-Indikator-Trajektorie und der Pre-Target-Trajektorie korrigiert, wobei die korrigierte Korrelation als Vital-Korrelation bezeichnet wird. Bei der Korrelation kann wiederum von den bereits oben analog beschriebenen Annahmen ausgegangen werden. Entweder geht man davon aus, dass die Pre-Target-Trajektorie sich bei ändernden Vitalfunktionsdaten nicht ändert oder man geht z.B. davon aus, dass sie sich ebenfalls ändert. Im letzteren Fall kann dabei wieder von einem elastischen Modell ausgegangen werden. Insbesondere kann die Pre-Target-Trajektorie als Funktion der Pre-Vitalfunktionsdaten beschrieben werden. Dann kann basierend auf den Inter-Vitalfunktionsdaten die Pre-Target-Trajektorie korrigiert werden, wobei die korrigierte Pre-Target-Trajektorie als Vital-Target-Trajektorie bezeichnet wird und die für die aktuell gegebenen Inter-Vitalfunktionsdaten zu erwartende Trajektorie (des Tumors) beschreibt. Die so bestimmte Vital-Target-Trajektorie kann dann wiederum mit der Vital-Indikator-Trajektorie verglichen werden, um die Vital-Korrelation zu bestimmen. Die Vital-Korrelation kann insbesondere auch während der Bestrahlung in Abhängigkeit von den aktuell gegebenen Inter-Vitalfunktionsdaten berechnet, insbesondere korrigiert werden. Diese Vital-Korrelation kann dann die Grundlage bilden, um die während der Bestrahlung gegebene Lage des zu bestrahlenden Körperelements basierend auf der während der Bestrahlung gegebene Lage des Indikator-Körperelements und der Vital-Korrelation zu bestimmen, wobei die Vital-Korrelation eine Zuordnung zwischen der Lage des Indikator-Körperelements und der Lage des zu bestrahlenden Körperelements beschreibt. Basierend auf der bestimmten Lage des zu bestrahlenden Körperelements wird insbesondere der Behandlungsstrahl gesteuert. Die Vital-Korrelation kann also während der Bestrahlung alternativ zu den der beschriebenen Inter-Korrelation zur Bestimmung der Lage des zu bestrahlenden Körperelements herangezogen werden oder sie kann auch mit der Inter-Korrelation z.B. durch Mittelwertbildung, die auch gewichtet erfolgen kann, kombiniert werden. Auch können Abweichungen zwischen der Vital-Korrelation und der Inter-Korrelation dazu genutzt werden, um Kandidaten-Körperelemente oder Indikator-Körperelemente (und ihre zugeordneten Trajektorien) als für die Bestimmung ungeeignet auszuschließen.

Gemäß einer weiteren Ausführungsform werden die Pre-Vitalfunktionsdaten und die Inter-Vitalfunktionsdaten miteinander verglichen. Basierend auf dem Vergleich werden Hinweissignale ausgegeben. Insbesondere werden Hinweissignale ausgegeben, wenn sich Abweichungen zwischen den Pre-Vitalfunktionsdaten und den Inter-Vitalfunktionsdaten zeigen. Diese Hinweissignale können akustisch, visuell und/oder taktil sein. Insbesondere kann der Umfang der Abweichung angezeigt werden. Auf diese Art und Weise kann ein Patient angelernt werden, in etwa mit denselben Vitalparametern die eigentliche Bestrahlung durchzuführen, wie sie während der Erzeugung des Analysebildes gegeben waren. Somit kann mit einer größeren Sicherheit davon ausgegangen werden, dass dieselbe Korrelation zwischen der zur Steuerung der Behandlung genutzten Indikator-Trajektorie und Pre-Target-Trajektorie gegeben ist, wie bei der Gewinnung der Pre-Analysedaten. Auch können die Hinweissignale für einen Bediener des Bestrahlungsgeräts genutzt werden, um mit dem Beginn der Bestrahlung zu warten, bis sich ähnliche Vitalparameter eingestellt haben, wie sie bei der Gewinnung der Pre-Analysedaten gegeben waren.

Die Erfindung ist weiter auf ein Programm gerichtet, insbesondere ein Computerprogramm, das, wenn es auf einem Computer läuft oder in einen Computer geladen wird, den Computer veranlasst das im vorhergehenden beschriebene Verfahren durchzuführen. Die Erfindung betrifft weiter einen Programmspeicher, insbesondere einen elektronischen oder magnetischen oder optischen Programmspeicher, auf den das Programm gespeichert ist. Die Erfindung betrifft weiter eine Signalwelle, wie sie beispielsweise über das Internet übertragen wird und die Informationen trägt, die das Programm darstellen. Die Erfindung betrifft weiter ein Computer, insbesondere einen elektronisch programmierbaren Computer, auf dem das Programm läuft oder in dessen Speicher das Programm geladen ist.

Weiter betrifft die Erfindung ein Behandlungsstrahlsystem, das ein Behandlungsgerät umfasst. Dieses Behandlungsgerät ist ausgebildet einen Behandlungsstrahl abzugeben, um das zu bestrahlende vital-bewegte Körperelement zu bestrahlen. Das Behandlungssystem umfasst weiter den vorgenannten Computer. Dieser Computer umfasst vorzugsweise eine Daten-Schnittstelle, um Steuerdaten die zur Steuerung des Behandlungsstrahls verwendet werden, zu einer Steuervorrichtung auszugeben werden. Diese zur Steuerung ausgegebenen Steuerdaten umfassen insbesondere zumindest eine der folgenden Daten oder werden basierend auf zumindest einer der folgenden Daten berechnet: mindestens eine (Pre-, Inter- und/oder Vital-) Indikator-Trajektorie, mindestens die Lage eines Indikator-Körperelements, Korrelationsdaten, die die (Pre-, Inter- und/oder Vital-) Korrelation beschreiben. Vorzugsweise wird basierend auf der Lage des mindestens einen Indikator-Körperelements und der Korrelation die Lage des Targets berechnet. Diese zur Berechnung herangezogene Lage des mindestens einen Indikator-Körperelements wird vorzugsweise basierend auf den realen Inter-Analysedaten bestimmt, die insbesondere während des Bestrahlungsvorgangs gewonnen werden. Diese Lage beschreibt somit vorzugsweise die während des Bestrahlungsvorgangs aktuell gegebene Lage des mindestens einen Indikator-Körperelements. Die zur Berechnung herangezogene Korrelation umfasst vorzugsweise eine Zuordnung zwischen dieser (aktuellen) Lage des Indikator-Körperelements und der Lage des Targets z.B. in der Form einer Nachschlagtabelle. Die Bestimmung der hierin beschriebenen Korrelation umfasst insbesondere die Bestimmung dieser Zuordnung. Das Behandlungsstrahlsystem umfasst die genannte Steuervorrichtung zur Steuerung der Lage des Behandlungsstrahls basierend auf den über die Daten-Schnittstelle übermittelten Steuerdaten. Weiter umfasst das Behandlungssteuersystem vorzugsweise ein Analysegerät zur Erzeugung realer Inter-Analysedaten, die vorzugsweise dem Computer und/oder der Steuervorrichtung zugeführt werden. Vorzugsweise berechnet das erfindungsgemäße Verfahren die Steuerdaten basierend auf der bestimmten Korrelation, die durch Korrelationsdaten beschrieben wird und den realen Inter-Analysedaten. Basierend auf den realen Inter-Analysedaten wird die aktuelle Lage des Indikator-Körperelements bestimmt und insbesondere wird bestimmt an welcher Stelle der realen Indikator-Trajektorie sich das Indikator-Körperelement befindet. Basierend hierauf und basierend auf den Korrelationsdaten wird dann die (wahrscheinliche) Lage des zu bestrahlenden Körperelements berechnet und diese Lage kann als Steuerdaten der Steuervorrichtung zugeführt.

Im Folgenden werden Ausführungsformen der Erfindung beschrieben. Merkmale verschiedener Ausführungsfomen können miteinander kombiniert werden. Die Ausfülwungsformen offenbaren weitere vorteilhafte Merkmale.

Im Folgenden wird der Begriff "4D CT" beispielhaft für die Pre-Analysedaten genannt. Ein 4D CT ist ein vierdimensionales CT, wobei sich drei Dimensionen auf den Raum und eine Dimension auf die Zeit bezieht. Ein Indikator-Körperelement wird im Folgenden beispielhaft als Tumorpositions-Indikator (TPI) bezeichnet, da gemäß einer Ausführungsform das Indikator-Körperelement dazu genutzt werden soll, die Position eines zu bestrahlenden Körperelements, insbesondere eines Tumors bestimmen zu lassen, also "anzuzeigen". Der Tumorpositions-Indikator ist eine Struktur, die sich aufgrund der Wirkung desselben oder derselben Vitalparameter, also aufgrund desselben Aktivators (häufig die Atmung, z.B. aber auch der Herzschlag) bewegt, wie dies auch das zu bestrahlende Körperelement (Tumor) tut. Während des Bestrahlungsvorganges werden gemäß einer Ausführungsform Röntgengeräte eingesetzt, um den Bereich des Körpers, in dem sich der Tumor befindet, einer Röntgenstrahlenanalyse (insbesondere zweidimensionalen Röntgenstrahlenanalyse) zu unterziehen, also um zweidimensionale Röntgenbilder, die insbesondere aus verschiedenen Aufnahmerichtungen gewonnen werden, zu gewinnen. In diesen Röntgenbildern ist jedoch der Tumor selbst oft nicht sichtbar. Deshalb soll ein Indikator dabei helfen, die Position des nicht sichtbaren Tumors aus der Position des Indikators zu bestimmen. Gemäß der Erfindung wird vorzugsweise der beste Tumorpositionsindikator (TPI) vollautomatisch bestimmt und insbesondere wird vollautomatisch eine Korrelation zwischen der Lage des TPI und der Lage des zu bestrahlenden Körperelements (hierin auch als "Target" bezeichnet) berechnet. Vorzugsweise wird eine Röntgenbildsequenz, die ein Beispiel für durch (reale) Inter-Analysedaten beschriebene Bilder darstellt, kurz vor der Behandlung erstellt, um die bereits bestimmte Korrelation zu aktualisieren, also gegebenenfalls abzuändern, um so die Inter-Korrelation zu erhalten. Die bestimmte Korrelation (Inter-Korrelation) beschreibt beispielsweise als Funktion und/oder in Tabellenform den Zusammenhang zwischen der Lage des TPI und der Lage des Target.

Insbesondere nutzt die Erfindung (z.B. das erfindungsgemäße Verfahren, das erfindungsgemäße Programm, der erfindungsgemäße Computer oder das erfindungsgemäße Behandlungssystem) die folgenden Daten: 4D CT (zur Initialisierung, also zur vorbereitenden Berechnung der Korrelation) und insbesondere zusätzlich die Röntgenbildersequenz (reale Inter-Analysedaten), die insbesondere kurz vor dem eigentlichen Bestrahlungsvorgang gewonnen werden, um die während der Initialisierung bestimmte Korrelation (Pre-Korrelation) gegebenenfalls zu aktualisieren, um so die Inter-Korrelation zu gewinnen.

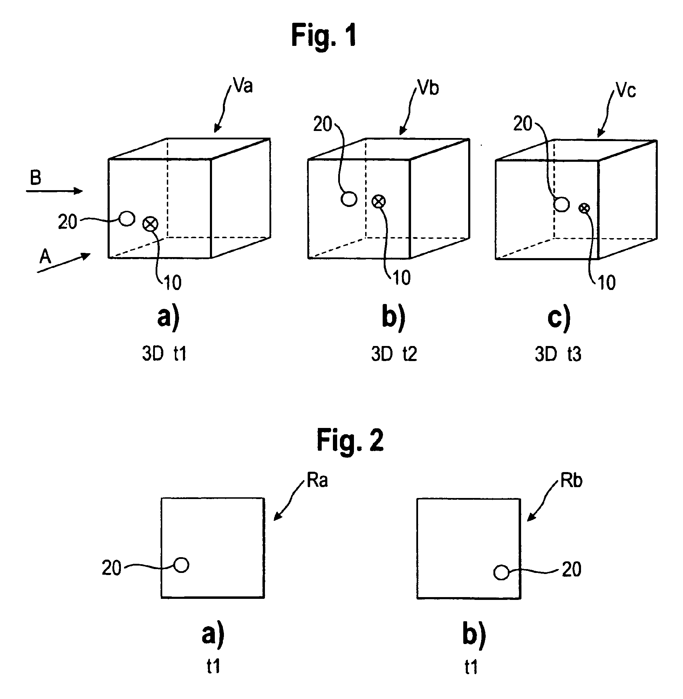

Figur 1 zeigt drei Volumen Va, Vb und Vc einer Sequenz von dreidimensionalen Pre-Analysebildern, insbesondere eines 4D CT. Der Tumor 10 ist in jedem Bild mit einem x gekennzeichnet und nimmt einen Teil des Analyse-Volumens Va, Vb und Vc ein. Der Tumor 10 bewegt sich vom Zeitpunkt t1 zum Zeitpunkt t2 und vom Zeitpunkt t2 zum Zeitpunkt t3 entlang einer Trajektorie (Pre-Target-Trajektorie), die insbesondere in sich geschlossen ist und insbesondere durch eine Vitalbewegung verursacht wird. In der Nähe des Tumors 10 befindet sich ein mit einem Kreis gekennzeichnetes Kandidaten-Körperelement 20, das potentiell als Tumorpositionsindikator (TPI), also als Indikator-Körperelement genutzt werden kann und das einen Teil des Analysevolumens, also ein Teilvolumen (VOI) einnimmt. Dieses Kandidaten-Köiperelement 20 durchläuft ebenfalls eine Vitalbewegung entlang einer Kandidaten-Trajektorie im dreidimensionalen Raum. Es ändert also seine Lage vom Zeitpunkt t1 (Figur 1a) zum Zeitpunkt t2 (Figur 1b) und nochmals von Figur 1b (Zeitpunkt t2) zur Figur 1c (Zeitpunkt t3).

Es lassen sich somit dreidimensionale Trajektorien für den Tumor 10 und das Kandidaten-Körperelement 20 im dreidimensionalen Raum basierend auf den Pre-Analysedaten bestimmen. Gemäß einer Ausführungsform wird eine dreidimensionale Trajektorie (Pre-Target-Trajektorie) für den Tumor 10 bestimmt. Bezüglich des Kandidaten-Körperelements wird wie folgt vorgegangen.

Figur 2 zeigt zweidimensionale Pre-Analysebilder, bei denen es sich beispielsweise um DRRs handeln kann. Gemäß einer Ausführungsform werden die zweidimensionalen Analysebilder Ra und Rb, wie sie in Figur 2a und 2b gezeigt sind zu den verschiedenen Zeitpunkten, die jedem dreidimensionalen Bild der Analysevolumina Va, Vb und Vc zugeordnet ist, bestimmt. Das zweidimensionale Analysebild Ra gibt die Situation zum selben Zeitpunkt t1 wieder, wie das zweidimensionale Analysebild Rb. Jedoch wurden die zweidimensionalen Analysebilder Ra und Rb unter der Annahme unterschiedlicher Analysebedingungen berechnet. Für Ra wird eine Aufnahmerichtung A angenommen, die sich von der Aufnahmerichtung B unterscheidet, mit der das Analysebild Rb aus den dreidimensionalen Pre-Analysedaten berechnet wird. Die Aufnahmerichtungen A und B sind in Figur 1a angedeutet. Die Aufnahmerichtung A ist eine Draufsicht auf die vordere Seite des Analysevolumens Va und die Aufnahmerichtung B ist eine Draufsicht auf die in Figur 1a links liegende Seite des Analysevolumens Va. Für jeden Zeitpunkt der Sequenz dreidimensionaler Analysebilder, insbesondere zu dem Zeitpunkt t1, t2 und t3 wird ein zweidimensionales Analysebild (DRR) insbesondere für beide Aufnahmerichtungen simuliert, sodass sich für beide Aufnahmerichtungen jeweils eine DRR Sequenz ergibt. Die Abkürzung DRR steht für "digitally reconstructed radiographs" oder "digitally rendered radiographs". Die zweidimensionalen Kandidaten-Körperelemente 20 in Figur 2a und 2b stellen dasselbe Kandidaten-Körperelement dar, nämlich das Kandidaten-Körperelement 20 der Figur 1a. Die zweidimensionalen Körperelemente nehmen einen Teilbereich (ROI) der Analysebilder Ra und Rb ein.

Da die zweidimensionalen Analysebilder Ra und Rb aus verschiedenen Aufnahmerichtungen (A und B) gewonnen wurden kann basierend auf den bekannten Analysebedingungen (Aufnahmerichtungen) und basierend auf der Lage des Kandidaten-Körperelements 20 in den zweidimensionalen Analysebildern Ra und Rb insbesondere durch Rückprojektion die Lage des Kandidaten-Körperelements 20 im dreidimensionalen Raum bestimmt werden. Diese bestimmte Lage stimmt mit der Lage des Kandidaten-Körperelements 20 überein, die in Figur 1a gezeigt ist.

Die in Figur 2 dargestellten zweidimensionalen Analysebilder stellen simulierte Analysebilder dar. Diese Bilder entsprechen Bildern, wie sie während des Bestrahlungsvorganges erzeugt werden. Auf diese zweidimensionalen simulierten Analysebilder, genauer auf diese zweidimensionalen Bildsequenzen wird nun vorzugsweise ein Trackingalgorithmus angewendet, um den Teilbereich 20 in den anderen zweidimensionalen Bildern der Sequenz zu tracken. Der Teilbereich 20 wird im Folgenden auch als ROI (region of interest) bezeichnet. Der ROI 20 ist die zweidimensionale Version des Volumens VOI 20 in Figur 1. Ein derartiger Trackingalgorithmus ist beispielsweise in der EP 08 169 422.6 oder der entsprechenden US 61/150,148 offenbart. Somit kann man für die beiden zweidimensionalen Sequenzen von Analysebildern jeweils die Lage des entsprechenden VOI bestimmen. Falls die ROIs basierend auf den DRRs trackbar sind, ist es wahrscheinlich, dass auch während des eigentlichen Bestrahlungsvorganges eine Trackbarkeit gegeben ist. Ein derartiges Teilvolumen 20 oder ein derartiges ROI 20 eignet sich somit als Kandidaten-Körperelement. Auch kann man die dreidimensionale Kandidaten-Trajektorie, die sich aus den zweidimensionalen DRRs ergibt mit der dreidimensionalen Trajektorie vergleichen, die sich aus den dreidimensionalen Pre-Analysebildern ergibt, also aus der Sequenz der Volumina Va, Vb, Vc usw. Stimmt die Trajektorie überein, so spricht dies dafür, dass das Trackingergebnis gut ist. Stimmt die Trajektorie nicht überein, so kann das entsprechende Kandidaten-Körperelement verworfen werden, also nicht als Indikator-Körperelement herangezogen werden.

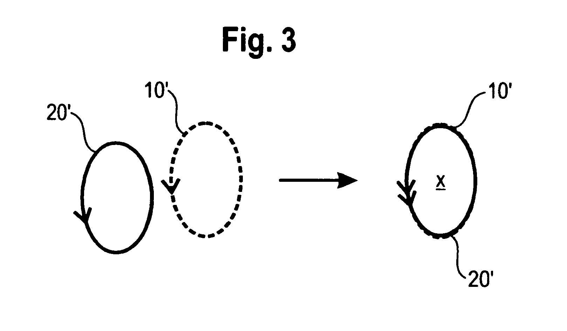

Weiter kann zur Auswahl eines Kandidaten-Körperelements als Indikator-Körperelement insbesondere wie folgt vorgegangen werden. Die sich ergebende dreidimensionale Trajektorie (z.B. die sich aus der Rückprojektion basierend auf den zweidimensionalen Sequenzen ergebene Trajektorie) wird mit der dreidimensionalen Tumor-Trajektorie, die sich aus den 4D CT ergibt, verglichen. Insbesondere wird die Korrelation zwischen den beiden Trajektorien, also die Ähnlichkeit zwischen den Trajektorien bestimmt. Zur Bestimmung der Ähnlichkeit können die beiden Trajektorien beispielsweise "normalisiert" werden. Dies bedeutet, dass der Schwerpunkt (das Zentrum ihrer Bewegung) überlagert wird. Dies ist schematisch in Figur 3 gezeigt. 20' zeigt die Trajektorie (Kandidaten-Trajektorie) des Kandidaten-Körperelements und 10' zeigt die Trajektorie (Pre-Target-Trajektorie) des Tumors. Rechts von dem Pfeil sind die beiden Trajektorien überlagert dargestellt, wobei sie um den gemeinsamen Schwerpunkt x herum verlaufen. Aus den Abweichungen zwischen den beiden überlagerten Trajektorien 10' und 20' kann man das Maß der Ähnlichkeit bestimmen.

Gemäß einer Ausführungsform wird aus mehreren möglichen Kandidaten-Trajektorien diejenige ausgewählt, die am stärksten mit der Tumor-Trajektorie (Pre-Target-Trajektorie) korreliert.

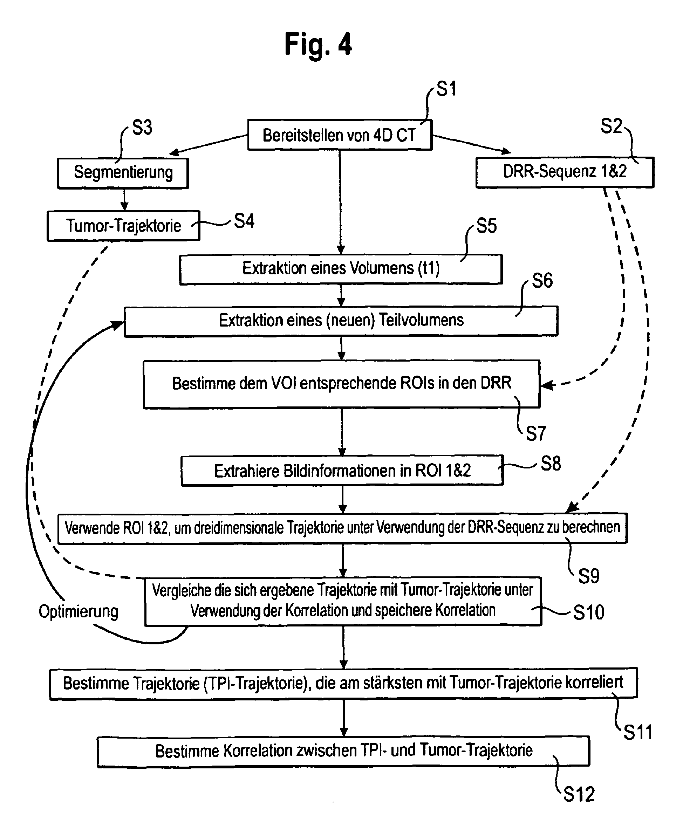

Figur 4 zeigt schematisch, wie mit den Pre-Analysedaten (4D CT-Daten) eine Kandidaten-Trajektorie und die Korrelation bestimmt wird.

Im Schritt S1 werden die 4D CT-Daten (Pre-Analysedaten) bereitgestellt. Aus diesen 4D CT-Daten werden zwei DRR-Sequenzen 1 und 2 (simulierte Inter-Analysedaten) bestimmt (Schritt S2) die 4D CT-Daten werden weiter im Schritt S3 segmentiert. Dies bedeutet die Analysevolumen Va, Vb und Vc werden zu verschiedenen Zeitpunkten aus der dreidimensionalen Sequenz (4D CT Bilder) extrahiert. Die extrahierten Analysevolumina Va, Vb und Vc, die den Tumor 10 beinhalten, werden im Schritt S4 zur Tumor-Trajektorie 10' (Pre-Target-Trajektorie) verknüpft. Die bereitgestellten 4D CT-Daten werden auch genutzt, um ein Kandidaten-Körperelement 20 zu bestimmen. Hierzu wird ein Teilvolumen, das dem Kandidaten-Körperelement 20 entspricht, zu einem Zeitpunkt der dreidimensionalen Sequenz, die durch die 4D CT-Daten dargestellt wird, herausgegriffen. Das Herausgreifen dieses Teilvolumens kann mit Hilfe eines Suchalgorithmus erfolgen, der beispielsweise besonders kontrastreiche Teilvolumina herausgreift. Es kann aber auch schrittweise das gesamte dreidimensionale Analysevolumen Va nach Teilvolumina abgetastet werden, sodass letztendlich die Teilvolumina, aus die das Analysevolumen Va beinhaltet oder die zusammengenommen das Analysevolumen Va ausfüllen, auf ihre Tauglichkeit für ein Indikator-Körperelement überprüft werden. Gemäß dem Schritt S5 greift man somit ein Analysevolumen Va aus der Sequenz der Analysevolumina Va, Vb und Vc, die durch die 4D CT-Daten beschrieben werden, heraus. Dieses Analysevolumen Va entspricht dem Zustand zu einem bestimmten Zeitpunkt, z.B. dem Zeitpunkt t1. Dann wird im Schritt S6 ein Teilvolumen, das dem Kandidaten-Körperelement 20 entspricht, beliebig oder mit Hilfe eines Suchalgorithmus (Optimierers) herausgegriffen. Hierbei können z.B. diejenigen Volumina, die sich in der Nähe des Tumors 10 befinden, bevorzugt werden. Dieses Teilvolumen (Kandidaten-Körperelement 20) beschreibt somit den Zustand ebenfalls zum Zeitpunkt t1.

Im nächsten Schritt S7 werden dann in dem DRR-Bild 1 und 2, die zu dem Zeitpunkt t1 gegeben sind, jeweils ein ROI bestimmt, das dem VOI entspricht. Die DRRs werden basierend auf den Analysebedingungen bestimmt.

Im nächsten Schritt S8 wird dann die in den jeweiligen ROIs enthaltene Bildinformation extrahiert.

Im Schritt S9 wird dann die extrahierte Bildinformation genutzt, um in der DRR-Sequenz jeweils einen ähnlichen ROI aufzufinden und somit die ROIs zu tracken, wie dies z.B. in der bereits oben erwähnten EP 08 169 422.6 oder der entsprechenden US 61/150,148 beschrieben ist. Hat man somit eine Sequenz von ROIs jeweils für beide DRR-Sequenzen 1 und 2, so kann man durch Rückprojektion basierend auf den Analysebedingungen eine dreidimensionale Trajektorie basierend auf den DRR-Sequenzen berechnen (Schritt S9). Gemäß einer Variante der Erfindung kann diese dreidimensionale Trajektorie mit einer dreidimensionalen Trajektorie verglichen werden, die direkt basierend auf den 4D CT-Daten bestimmt wurde und die Trajektorie des VOIs darstellt. Stimmt diese Trajektorie überein oder ist ein bestimmtes Ähnlichkeitsmaß, dasdie Ähnlichkeit zwischen den Trajektorien beschreibt, überschritten, so spricht dies für die Verwendung der Trajektorie als Kandidaten-Trajektorie und insbesondere für ihre Auswahl als Indikator-Trajektorie. Dieser Schritt ist jedoch rein optional. Im nächsten Schritt S 10 wird die sich aus der DRR-Sequenz ergebene dreidimensionale Kandidaten-Trajektorie mit der dreidimensionalen Tumor-Trajektorie verglichen, die im Schritt S4 bestimmt wurde. Der Vergleich umfasst insbesondere die Bestimmung der Korrelation und insbesondere dessen Abspeicherung. Danach kehrt man zum Schritt S6 zurück und extrahiert ein neues Teilvolumen VOI mit diesem neuen extrahierten Teilvolumen durchläuft man ebenfalls die Schritte S7, S8, S9 und S10. Dies wiederholt man beispielsweise bis das gesamte im Schritt S5 aus der Sequenz extrahierte Analysevolumen Va mit den Teilvolumina abgetastet wurde. Dann wird im Schritt S11 bestimmt, für welches Teilvolumen VOI sich die stärkste Korrelation zwischen der bestimmten Kandidaten-Trajektorie und der Tumor-Trajektorie (Pre-Target-Trajektorie) ergibt. Die Kandidaten-Trajektorie (TPI-Trajektorie) wird ausgewählt, die die stärkste Korrelation zeigt. Diese ausgewählte Kandidaten-Trajektorie ist die Indikator-Trajektorie.

Im Schritt S 12 wird dann die für die Indikator-Trajektorie bestimmte Korrelation ausgegeben, basierend auf der dann die Position des Tumors bestimmt werden kann.

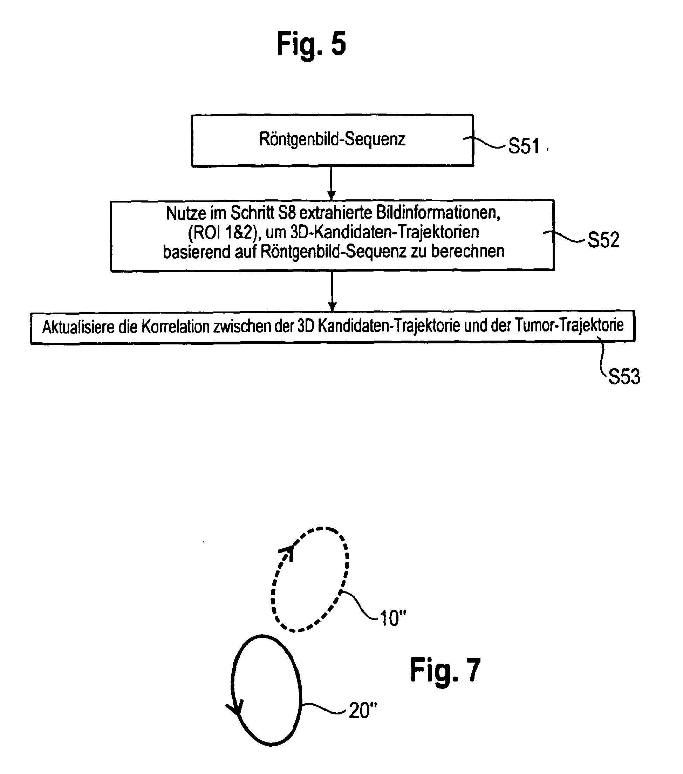

Figur 5 zeigt eine optionale Ergänzung des Verfahrens gemäß einer Ausführungsform. Bei dieser Ausführungsform werden insbesondere kurz vor dem eigentlichen Bestrahlungsvorgang Röntgenbilder erstellt, die eine Röntgenbild-Sequenz (reale Inter-Analysedaten) bilden. Insbesondere werden diese wieder unter mindestens zwei verschiedenen Aufnahmerichtungen erstellt, wobei die Aufnahmebedingungen (Analysebedingungen) bekannt sind. Dies erfolgt im Schritt S51. Danach wird im Schritt S52 die bereits im Schritt S8 extrahierte Bildinformation der ROIs1 und 2 genutzt, um entsprechende Teilbereiche in den zu einem bestimmten Zeitpunkt der Sequenz gegebenen (beiden) Röntgenbildern zu finden. Diese aufgefundenen Teilbereiche werden dann wiederum mit dem Trackingalgorithmus getrackt, wobei dieser Trackingalgorithmus dann auf die kurz vor der Bestrahlung gewonnene Röntgenbild-Sequenz angewendet wird. Hat man dann jeweils zwei zweidimensionale Kandidaten-Trajektorien, so kann man wiederum basierend auf den Aufnahmebedingungen (Analysebedingungen) eine dreidimensionale Trajektorie berechnen, die eine dreidimensionale Kandidaten-Trajektorie darstellt.

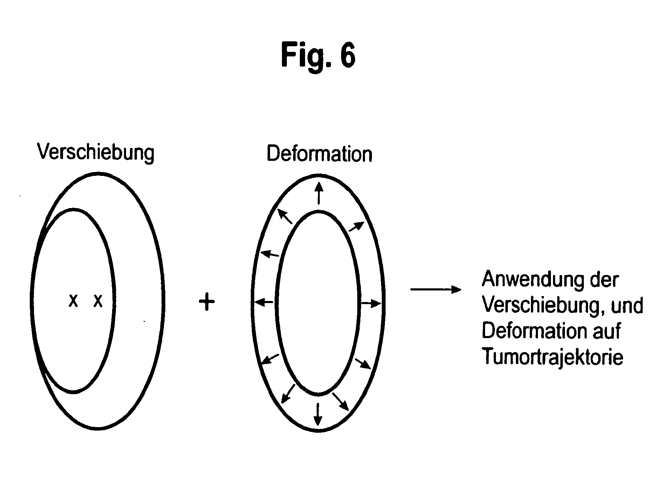

Im Schritt S53 wird dann basierend auf der neu berechneten dreidimensionalen Kandidaten-Trajektorie die Korrelation (Inter-Korrelation) zwischen dieser Kandidaten-Trajektorie und der Tumor-Trajektorie bestimmt, insbesondere wird eine bereits vorher berechnete Korrelation aktualisiert oder die Korrelation wird neu berechnet. Insbesondere geht das Ergebnis der Pre-Indikator-Trajektorie mit in die Bestimmung, insbesondere Neuberechnung der Korrelation ein. Insbesondere sind dies Verschiebung und Deformation (siehe Figur 6 relativ zur Pre-Indikator-Trajektorie).

Der Schritt S9 aus Figur 4 ist optional. Das Verfahren gemäß Figur 4 wird vorzugsweise genutzt, um insbesondere nur für diejenigen ROIs die Korrelation neu zu berechnen, für die das Verfahren nach Figur 4 vielversprechende Ergebnisse geliefert hat, wie im Folgenden beschrieben wird.

Der Schritt S9 aus Figur 4 ist optional insbesondere bei einer Neuberechnung der Korrelation. Das Verfahren gemäß Figur 4 wird vorzugsweise genutzt, um insbesondere nur für diejenigen ROIs die Korrelation neu zu berechnen, für die das Verfahren nach Figur 4 vielversprechende Ergebnisse geliefert hat, wie im Folgenden beschrieben wird. Das Verfahren nach Figur 4 wird insbesondere genutzt, um eine Vorauswahl möglicher Kandidaten-Körperelemente (insbesondere von VOIs oder ROIs) zu treffen. Für diese vorausgewählten ROIs (oder VOIs) wird dann das Verfahren nach Figur 5 durchgeführt. Vorzugsweise wird im Schritt S53 der Figur 5 bestimmt, wie sich die Kandidaten-Trajektorie, die basierend auf den Pre-Analysedaten (DRRs) bestimmt wurde geändert hat, und zwar im Vergleich zu der Kandidaten-Trajektorie, die sich aus den Inter-Analysedaten (der Röntgenbildsequenz des Schrittes S51) ergibt. Diese bestimmte Veränderung wird z.B. durch Addition einer Verschiebung und einer Deformation beschrieben, wie dies in Figur 6 dargestellt ist. Wobei in Figur 6 links von dem Pluszeichen die Verschiebung des mit x gekennzeichneten Schwerpunkts dargestellt ist und rechts von dem Pluszeichen die Deformation (Ausweitung) der Trajektorie dargestellt ist. Die somit bestimmte Veränderung (z.B. Kombination aus Verschiebung und Deformation) wird dann gemäß einer Ausführungsform ebenfalls auf die Pre-Target-Trajektorie (Tumor-Trajektorie) angewandt. Man geht also davon aus, dass sich die Trajektorie des zu bestrahlenden Körperelements (Tumors) in einer Weise ändert, die der Änderung der Kandidaten-Trajektorie entspricht. Figur 7 zeigt den möglichen Fall, dass sich das Kandidaten-Körperelement gegensinnig zu dem zu bestrahlenden Körperelements (Tumor) bewegt. Die beiden Trajektorien sind mit 20" und 10" gekennzeichnet. Auch in diesem Fall kann die Korrelation der Trajektorien bestimmt werden, also allgemein gesprochen die gegenseitige Information. Insbesondere kann ein Ähnlichkeitsmaß für beide Trajektorien bestimmt werden und dieses als Grundlage für die Bestimmung der Korrelation genutzt werden. Insbesondere kann ein Deformationsmodell, das z.B. aus einer elastischen Registrierung gewonnen wurde, helfen. Für den Trajektorienabgleich wird insbesondere die "gegenseitige Information" (Mutual Information) aus der Informationstheorie (http://en.wikipedia.org/wiki/Mutual information) genutzt, die insbesondere als Ähnlichkeitsmaß hergenommen wird.

Zum Deformationsmodell: Mithilfe der Pre-Analysedaten (4D CT) kann über bildbasierende elastische Fusion ein Deformationsmodell des anatomischen Körperteils (z.B. Lunge), der einer Vitalbewegung ausgesetzt ist, erstellen. Basierend darauf berechnet man, wie sich das Vitalbewegte Körperteil (z.B. Lunge) in unterschiedlichen anatomischen Regionen über den Vitalzyklus (z.B. Atemzyklus) hinweg verformt. Die berechnete Information über die Verformung wird dann vorzugsweise für eine Bestimmung (insbesondere Neuberechnung oder Aktualisierung) des Korrelationsmodells insbesondere im Schritt S53 genutzt.

## Patentansprüche

1. Bestimmungsverfahren, um ein nicht zu bestrahlendes, vital-bewegtes Indikator-Körperelement (20), das als Indikator für die Lageänderung eines zu bestrahlenden vital-bewegten Körperelements (10), insbesondere eines Tumors eines anatomischen Körpers dient, und/oder um eine die Vitalbewegung des Indikator-Körperelements (20) beschreibende Indikator-Trajektorie (20') zu bestimmen, mit folgenden Schritten:
• Pre-Analysedaten werden bereitgestellt, die vor der Bestrahlung gewonnen wurden und zeitlich aufgelöst die durch eine Vitalbewegung geänderte Lagen des zu bestrahlenden, vital-bewegten Körperelements (10) und die Lagen zumindest eines nicht zu bestrahlenden Kandidaten-Körperelements (20) in einem dreidimensionalen Raum beschreiben;
• eine Pre-Target-Trajektorie, die eine Vitalbewegung beschreibt, die das zu bestrahlende, vital-bewegte Körperelement durchläuft, wird basierend auf den Pre-Analysedaten bestimmt;
• zumindest eine Kandidaten-Trajektorie, die die Lagen mindestens einer der nicht zu bestrahlenden Kandidaten-Körperelemente beschreibt, wird basierend auf den Pre-Analysedaten bestimmt;
• basierend auf der zumindest einen Kandidaten-Trajektorie und der Pre-Target-Trajektorie (10') wird zumindest eines der zumindest einen Kandidaten-Körperelemente als Indikator-Körperelement (20) und/oder eine der zumindest einen Kandidaten-Trajektorie als Pre-Indikator-Trajektorie (20') bestimmt oder
• basierend auf der zumindest einen Kandidaten-Trajektorie und der Pre-Target-Trajektorie wird bestimmt, dass keines der Kandidaten-Körperelemente als Pre-Indikator-Körperelement (20) bestimmbar ist und/oder keine der Kandidaten-Trajektorien als Pre-Indikator-Trajektorie (20') bestimmbar ist; **dadurch gekennzeichnet, dass**
• basierend auf den Pre-Analysedaten Inter-Analysedaten simuliert werden, wobei
• die Inter-Analysedaten sich ändernde Lagen zumindest eines Teils der Vielzahl der nicht zu bestrahlenden, Körperelemente zumindest zeitweise während der Bestrahlung zu verschiedenen Zeitpunkten beschreiben.

2. Bestimmungsverfahren nach Anspruch 1, bei welchem
die zumindest eine Kandidaten-Trajektorie direkt aus den Pre-Analysedaten bestimmt wird oder basierend auf den simulierten Inter-Analysedaten bestimmt wird, die basierend auf den Pre-Analysedaten bestimmt wurden.

3. Bestimmungsverfahren nach Anspruch 2, bei welchem
• ein Trackingverfahren auf die simulierten Inter-Analysedaten angewendet wird, das dem Tracken von Körperelementen während ihrer Vitalbewegung dient und das dazu bestimmt ist, auf reale Inter-Analysedaten angewendet zu werden, die während des Bestrahlungsvorgangs oder unmittelbar vor dem Bestrahlungsvorgang gewonnen werden;
• wobei nur derartige der nicht zu bestrahlenden, Körperelemente für die Bestimmung als Indikator-Körperelement herangezogen werden, die durch das auf die simulierten Inter-Analysedaten angewendete Trackingverfahren trackbar sind.

4. Bestimmungsverfahren nach einem der vorhergehenden Ansprüche soweit sie die Merkmale des Anspruches 1 und 2 enthalten, bei welchem:
• die simulierten Inter-Analysedaten zweidimensional sind und zeitlich aufgelöst die Lagen zumindest eines Teils der Vielzahl der nicht zu bestrahlenden, vital-bewegten Körperelemente zumindest zeitweise in einer Fläche beschreiben;
• die zumindest eine Kandidaten-Trajektorie eine zweidimensionale Kandidaten-Trajektorie ist oder umfasst und die Vitalbewegung des zumindest einen Kandidaten-Körperelements in der Fläche beschreibt.

5. Bestimmungsverfahren nach Anspruch 3 oder 4, bei welchem die zumindest eine Kandidaten-Trajektorie durch Anwendung des Trackingverfahrens auf die simulierten Inter-Analysedaten bestimmt wird, wobei die simulierten Inter-Analysedaten basierend auf den Pre-Analysedaten bestimmt wurden.

6. Bestimmungsverfahren nach einem der vorhergehenden Ansprüche, soweit sie die Merkmale der Ansprüche 3 und 4 enthalten, bei welchem
• die simulierten Inter-Analysedaten erste und zweite zweidimensionale, simulierte Inter-Analysedaten umfassen, die basierend auf den Pre-Analysedaten unter der Annahme von Inter-Analysebedingungen simuliert wurden, wobei die Inter-Analysebedingungen eine erste und zweite geplante Aufnahmerichtung beschreiben, mit der während eines realen Inter-Analysevorganges, der während der Bestrahlung stattfindet, erste und zweite zweidimensionale, reale Analysedaten gewonnen werden sollen; und
• das Trackingverfahren auf die ersten und zweiten zweidimensionalen Inter-Analysedaten angewendet wird, und
• nur diejenigen der trackbaren Kandidaten-Körperelemente für die Bestimmung als Pre-Indikator-Körperelement herangezogen werden, für sie sich erste und zweite Kandidaten-Trajektorien ergeben, die unter Berücksichtigung der Inter-Analysebedingungen nicht durch die Bewegung eines einzigen Körperelements in dem dreidimensionalen Raum erzeugt werden können.

7. Bestimmungsverfahren nach einem der vorherigen Ansprüche, bei welchem basierend auf einem Vergleich der zumindest einen Kandidaten-Trajektorie und der Pre-Target-Trajektorie eine Korrelation zwischen der zumindest einen Kandidaten-Trajektorie und der Pre-Target-Trajektorie bestimmt wird; und
basierend auf der Stärke der bestimmten Korrelation eines der zumindest einen Kandidaten-Körperelemente als Pre-Indikator-Körperelement und/oder eine der zumindest einen Kandidaten-Trajektorien als Pre-Indikator-Trajektorie bestimmt wird, insbesondere ausgewählt wird.

8. Erstes Korrekturverfahren zum Korrigieren der bestimmten Korrelation, wobei das Korrekturverfahren das Bestimmungsverfahren nach Anspruch 7 umfasst und
bei welchem
• reale Inter-Analysedaten bereitgestellt werden, die vor oder während der Bestrahlung gewonnen wurden, und
• die bestimmte Korrelation basierend auf den Inter-Analysedaten korrigiert wird.

9. Erstes Korrekturverfahren nach Anspruch 8, bei welchem
• eine Trajektorie des Indikator-Körperelements, die Inter-Indikator-Trajektorie genannt wird, basierend auf den realen Inter-Analysedaten bestimmt wird,
• eine Abweichung zwischen der mindestens einen bestimmten Pre-Indikator-Trajektorie und der dieser entsprechenden Inter-Indikator-Trajektorie bestimmt wird, und
• die Korrelation basierend auf der bestimmten Abweichung korrigiert wird.

10. Zweites Korrekturverfahren zum Korrigieren der bestimmten Korrelation, wobei das Korrekturverfahren das Bestimmungsverfahren nach Anspruch 7 umfasst oder das erste Korrekturverfahren nach Anspruch 8 oder 9 umfasst, und
bei welchem
• Pre-Vitalfunktionsdaten bereitgestellt werden, die bei der Gewinnung der Pre-Analysedaten erfasste Vital-Parameter beschreiben und
• Inter-Vitalfunktionsdaten bereitgestellt werden, die bei der Gewinnung der realen Inter-Analysedaten erfasste Vital-Parameter beschreiben,
• wobei die mindestens eine bestimmte Pre-Indikator-Trajektorie basierend auf den Pre-Vitalfunktionsdaten und den Inter-Vitalfunktionsdaten korrigiert wird, um mindestens eine Vital-Indikator-Trajektorie zu bestimmen, und
• die Korrelation basierend auf der mindestens einen Vital-Indikator-Trajektorie korrigiert wird.

11. Zweites Korrekturverfahren nach Anspruch 10, bei welchem
• die Pre-Vitalfunktionsdaten mit den Inter-Vitalfunktionsdaten verglichen werden und
• basierend auf den Vergleich Hinweissignale ausgegeben werden.

12. Programm, das wenn es auf einem Computer läuft oder in einen Computer geladen wird, den Computer veranlasst, eines der vorhergehenden Verfahren auszuführen.

13. Programmspeicher, auf dem das Programm nach Anspruch 12 gespeichert ist oder Signalwelle, die Informationen trägt, die das Programm nach Anspruch 12 darstellen oder Computer, auf dem das Programm nach Anspruch 12 läuft oder in dessen Speicher das Programm nach Anspruch 12 geladen ist.

14. Behandlungssrahlsystem mit
einem Behandlungsgerät, das ausgebildet ist einen Behandlungsstrahl abzugeben;
dem Computer nach Anspruch 12, der eine Steuer-Schnittstelle und eine Benutzer-Schnittstelle aufweist; und
einer Steuervorrichtung zur Steuerung der Lage des Behandlungsstrahles basierend auf von der Schnittstelle empfangene Steuerdaten.

## Claims

1. A determination method for determining an indicator body element (20) which is subject to vital movement, is not to be irradiated and serves as an indicator of the change in position of a body element (10) which is subject to vital movement and is to be irradiated, in particular a tumour of an anatomical body, and/or for determining an indicator trajectory (20') which describes the vital movement of the indicator body element (20), comprising the steps of:
• providing pre-analysis data which have been obtained before irradiation and which describe, chronologically resolved and in a three-dimensional space, the positions of the body element (10) which is subject to vital movement and is to be irradiated which are changed by a vital movement and the positions of at least one candidate body element (20) which is not to be irradiated;
• determining, on the basis of the pre-analysis data, a pre-target trajectory which describes a vital movement performed by the body element which is subject to vital movement and is to be irradiated;
• determining, on the basis of the pre-analysis data, at least one candidate trajectory which describes the positions of at least one of the candidate body elements which are not to be irradiated;
• determining, on the basis of the at least one candidate trajectory and the pre-target trajectory (10'), at least one of the at least one candidate body elements as an indicator body element (20) and/or one of the at least one candidate trajectory as a pre-indicator trajectory (20'); or
• determining, on the basis of the at least one candidate trajectory and the pre-target trajectory, that none of the candidate body elements can be determined as a pre-indicator body element (10) and/or none of the candidate trajectories can be determined as a pre-indicator trajectory (20'); **characterised in that**
• inter-analysis data are simulated on the basis of the pre-analysis data, wherein
• the inter-analysis data describe changing positions of at least some of the multitude of body elements which are not to be irradiated, at least intermittently during irradiation at different points in time.

2. The determination method according to claim 1, wherein the at least one candidate trajectory is determined directly from the pre-analysis data or is determined on the basis of the simulated inter-analysis data which have been determined on the basis of the pre-analysis data.

3. The determination method according to claim 2, wherein:
• a tracking method is applied to the simulated inter-analysis data, which serves to track body elements during their vital movement and is intended to be applied to actual inter-analysis data obtained during the irradiation procedure or immediately before the irradiation procedure;
• of the body elements which are not to be irradiated, only those which can be tracked by the tracking method applied to the simulated inter-analysis data are considered for determination as an indicator body element.

4. The determination method according to any one of the preceding claims, providing they contain the features of claim 1 and 2, wherein:
• the simulated inter-analysis data are two-dimensional and describe, chronologically resolved and in a plane, the positions of at least some of the multitude of body elements which are subject to vital movement and not to be irradiated, at least intermittently;
• the at least one candidate trajectory is or comprises a two-dimensional candidate trajectory and describes the vital movement of the at least one candidate body element in the plane.

5. The determination method according to claim 3 or 4, wherein the at least one candidate trajectory is determined by applying the tracking method to the simulated inter-analysis data, wherein the simulated inter-analysis data have been determined on the basis of the pre-analysis data.

6. The determination method according to any one of the preceding claims, providing they contain the features of claims 3 and 4, wherein:
• the simulated inter-analysis data comprise first and second two-dimensional simulated inter-analysis data which have been simulated on the basis of the pre-analysis data, assuming inter-analysis conditions, wherein the inter-analysis conditions describe a first and second planned recording direction in which first and second two-dimensional actual analysis data are to be obtained during an actual inter-analysis procedure which takes place during irradiation;
• the tracking method is applied to the first and second two-dimensional inter-analysis data; and
• only the trackable candidate body elements for which first and second candidate trajectories are produced which cannot be generated, taking into account the inter-analysis conditions, by moving a single body element in the three-dimensional space, are considered for determination as a pre-indicator body element.

7. The determination method according to any one of the previous claims, wherein:
• a correlation between the at least one candidate trajectory and the pre-target trajectory is determined on the basis of a comparison between the at least one candidate trajectory and the pre-target trajectory; and
• one of the at least one candidate body elements is determined, in particular selected, as a pre-indicator body element and/or one of the at least one candidate trajectories is determined, in particular selected, as a pre-indicator trajectory, on the basis of the degree of correlation determined.

8. A first correction method for correcting the determined correlation, wherein the correction method comprises the determination method according to claim 7, and wherein:
• actual inter-analysis data are provided which have been obtained before or during irradiation; and
• the determined correlation is corrected on the basis of the inter-analysis data.

9. The first correction method according to claim 8, wherein:
• a trajectory of the indicator body element which is referred to as the inter-indicator trajectory is determined on the basis of the actual inter-analysis data;
• a deviation between the at least one determined pre-indicator trajectory and the inter-indicator trajectory corresponding to it is determined; and
• the correlation is corrected on the basis of the determined deviation.

10. A second correction method for correcting the determined correlation, wherein the correction method comprises the determination method according to claim 7 or the first correction method according to claim 8 or 9, and wherein:
• pre-vital function data are provided which describe vital parameters detected when the pre-analysis data are obtained; and
• inter-vital function data are provided which describe vital parameters detected when the actual inter-analysis data are obtained,
• wherein the at least one determined pre-indicator trajectory is corrected on the basis of the pre-vital function data and the inter-vital function data in order to determine at least one vital-indicator trajectory, and
• the correlation is corrected on the basis of the at least one vital-indicator trajectory.

11. The second correction method according to claim 10, wherein:
• the pre-vital function data are compared with the inter-vital function data; and
• indication signals are outputted on the basis of the comparison.

12. A program which, when it is running on a computer or is loaded onto a computer, causes the computer to perform one of the preceding methods.

13. A program memory in which the program according to claim 12 is stored, or a signal wave which carries information representing the program according to claim 12, or a computer on which the program according to claim 12 is running or into the memory of which the program according to claim 12 has been loaded.

14. A treatment beam system, comprising:
• a treatment apparatus which is designed to emit a treatment beam;
• the computer according to claim 12, which comprises a control interface and a user interface; and
• a control device for controlling the position of the treatment beam on the basis of control data received from the interface.

## Revendications

1. Procédé de détermination pour déterminer un élément corporel d'indicateur (20) soumis à un mouvement vital, qui ne doit pas être irradié et qui sert d'indicateur pour le changement de position d'un élément corporel (10) soumis à un mouvement vital qui doit être irradié, en particulier une tumeur dans un corps anatomique, et/ou pour déterminer une trajectoire d'indicateur (20') qui décrit le mouvement vital de l'élément corporel d'indicateur (20), comportant les étapes suivantes consistant à :
• collecter des données de pré-analyse qui ont été acquises avant l'irradiation et qui décrivent avec une résolution temporelle dans un espace tridimensionnel les positions de l'élément corporel (10) soumis à un mouvement vital qui doit être irradié, qui sont changées par un mouvement vital, ainsi que les positions d'au moins un élément corporel candidat (20) qui ne doit pas être irradié,
• déterminer, sur la base des données de pré-analyse, une trajectoire de pré-cible qui décrit un mouvement vital suivi par l'élément corporel soumis à un mouvement vital qui doit être irradié,
• déterminer, sur la base des données de pré-analyse, au moins une trajectoire candidate qui décrit les positions d'au moins un des éléments corporels candidats qui ne doivent pas être irradiés,
• déterminer, sur la base de la au moins une trajectoire candidate et de la trajectoire de pré-cible (10'), au moins un des éléments corporels candidats comme élément corporel d'indicateur (20) et/ou une des au moins une trajectoires candidates comme trajectoire de pré-indicateur (20') ou
• déterminer, sur la base des au moins une trajectoires candidates et de la trajectoire de pré-cible, qu'aucun des éléments corporels candidats ne peut être déterminé comme élément corporel d'indicateur (20) et/ou qu'aucune des trajectoires candidates ne peut être déterminée comme trajectoire de pré-indicateur (20'), **caractérisé en ce que** le procédé comporte l'étape consistant à :
• simuler des données d'inter-analyse sur la base des données de pré-analyse,
• les données d'inter-analyse décrivant des positions variables d'au moins une partie de la pluralité des éléments corporels qui ne doivent pas être irradiés, au moins à certains instants pendant l'irradiation à différents points dans le temps.

2. Procédé de détermination selon la revendication 1,
dans lequel la au moins une trajectoire candidate est déterminée directement à partir des données de pré-analyse ou sur la base des données d'inter-analyse simulées qui ont été déterminées sur la base des données de pré-analyse.

3. Procédé de détermination selon la revendication 2, dans lequel
• un procédé de repérage est appliqué aux données d'inter-analyse simulées, lequel procédé sert à repérer des éléments corporels pendant leur mouvement vital et est destiné à être appliqué à des données d'inter-analyse réelles qui ont été acquises pendant le protocole d'irradiation ou directement avant le protocole d'irradiation,
• dans lequel seuls les éléments corporels qui ne doivent pas être irradiés et qui peuvent être repérés par le procédé de repérage appliqué aux données d'inter-analyse simulées sont utilisés pour la détermination en tant qu'élément corporel d'indicateur.

4. Procédé de détermination selon l'une quelconque des revendications précédentes lorsqu'elles incluent les caractéristiques des revendications 1 et 2, dans lequel :
• les données d'inter-analyse simulées sont bidimensionnelles et décrivent avec une résolution temporelle les positions d'au moins une partie de la pluralité des éléments corporels soumis à un mouvement vital qui ne doivent pas être irradiés, au moins à certains instants, dans une surface,
• la au moins une trajectoire candidate est ou inclut une trajectoire candidate bidimensionnelle et décrit le mouvement vital du au moins un élément corporel candidat dans la surface.

5. Procédé de détermination selon la revendication 3 ou 4, dans lequel la au moins une trajectoire candidate est déterminée en appliquant le procédé de repérage aux données d'inter-analyse simulées, les données d'inter-analyse simulées étant déterminées sur la base des données de pré-analyse.

6. Procédé de détermination selon l'une quelconque des revendications précédentes, lorsqu'elles incluent les caractéristiques des revendications 3 et 4, dans lequel
• les données d'inter-analyse simulées incluent des premières et secondes données d'inter-analyse simulées bidimensionnelles qui ont été simulées sur la base des données de pré-analyse en supposant des conditions d'inter-analyse, les conditions d'inter-analyse décrivant une première et une seconde directions d'enregistrement planifiées, dans lesquelles des premières et secondes données d'analyse réelles bidimensionnelles doivent être acquises pendant un procédé d'inter-analyse réel qui a lieu au cours de l'irradiation, et
• le procédé de repérage est appliqué aux premières et secondes données d'inter-analyse bidimensionnelles, et
• seuls les éléments corporels candidats pouvant être repérés, qui ne peuvent pas être générés par le mouvement d'un seul élément corporel dans l'espace tridimensionnel en tenant compte des conditions d'inter-analyse, sont utilisés pour la détermination en tant qu'élément corporel de pré-indicateur pour lequel des première et seconde trajectoires candidates sont produites.

7. Procédé de détermination selon l'une quelconque des revendications précédentes, dans lequel
sur la base d'une comparaison de la au moins une trajectoire candidate et de la trajectoire de pré-cible, une corrélation est déterminée entre la au moins une trajectoire candidate et la trajectoire de pré-cible, et
sur la base de la précision de la corrélation déterminée, un des au moins un éléments corporels candidats est déterminé comme élément corporel de pré-indicateur et/ou une des au moins une trajectoires candidates est déterminée, en particulier est choisie, comme trajectoire de pré-indicateur.

8. Premier procédé de correction pour corriger la corrélation déterminée, le procédé de correction comportant le procédé de détermination selon la revendication 7 et comportant les étapes consistant à :
• collecter des données d'inter-analyse réelles qui ont été acquises avant ou pendant l'irradiation, et
• corriger la corrélation déterminée sur la base des données d'inter-analyse.

9. Premier procédé de correction selon la revendication 8, dans lequel
• une trajectoire de l'élément corporel d'indicateur, appelée trajectoire d'inter-indicateur, est déterminée sur la base des données d'inter-analyse réelles,
• un écart entre la au moins une trajectoire de pré-indicateur déterminée et la trajectoire d'inter-indicateur correspondant à celle-ci est déterminé, et
• la corrélation est corrigée sur la base de l'écart déterminé.

10. Second procédé de correction pour corriger la corrélation déterminée, dans lequel le procédé de correction comporte le procédé de détermination selon la revendication 7 ou le premier procédé de correction selon la revendication 8 ou 9, et comportant les étapes consistant à :
• collecter des pré-données de fonctions vitales qui décrivent des paramètres vitaux détectés lors de l'acquisition des données de pré-analyse et
• collecter des inter-données de fonctions vitales qui décrivent des paramètres vitaux détectés lors de l'acquisition des données d'inter-analyse réelles,
• dans lequel la au moins une trajectoire de pré-indicateur déterminée est corrigée sur la base des pré-données de fonctions vitales et des inter-données de fonctions vitales, afin de déterminer au moins une trajectoire d'indicateur vitale, et
• la corrélation est corrigée sur la base de la au moins une trajectoire d'indicateur vitale.

11. Second procédé de correction selon la revendication 10, comportant les étapes consistant à :
• comparer les pré-données de fonctions vitales aux inter-données de fonctions vitales et
• générer des signaux d'alerte sur la base de la comparaison.

12. Programme qui, lorsqu'il est exécuté sur un ordinateur ou chargé dans un ordinateur, amène l'ordinateur à mettre en oeuvre l'un des procédés précédents.

13. Mémoire de programme dans laquelle est mémorisé le programme selon la revendication 12, ou onde de signal transportant des informations qui représentent le programme selon la revendication 12, ou ordinateur sur lequel s'exécute le programme selon la revendication 12 ou dans la mémoire duquel est chargé le programme selon la revendication 12.

14. Système de faisceau de traitement comportant
un appareil de traitement qui est conçu pour émettre un faisceau de traitement,
lequel système inclut l'ordinateur selon la revendication 12 qui comporte une interface de commande et une interface d'utilisateur, et
un dispositif de commande pour commander la position du faisceau de traitement sur la base de données de commande reçues de l'interface.
